# EUROPEAN PATENT APPLICATION

(11) **EP 2 676 556 A1**
(43) Date of publication of application: **25.12.2013**
(21) Application number: 12747614.1
(22) Date of filing: 17.02.2012
(51) Int. Cl.: A23L 2/38, A23F 3/06, A23F 3/14, A23F 3/16

(54) **METHOD FOR MANUFACTURING INGREDIENT FOR TEA DRINK**

(30) Priority: 17.02.2011 JP 2011032067; 17.02.2011 JP 2011032123; 17.02.2011 JP 2011032303
(71) Applicant: Suntory Beverage & Food Limited, Chuo-ku, Tokyo 104-0031 (JP)
(72) Inventor: FURUTA, Hiroki, Kawasaki-shi Kanagawa 211-0067 (JP); NAGAO, Koji, Kawasaki-shi Kanagawa 211-0067 (JP); MAKI, Hideki, Kawasaki-shi Kanagawa 211-0067 (JP); ANDO, Noriyuki, Kawasaki-shi Kanagawa 211-0067 (JP); KOBAYASHI, Shinichi, Kawasaki-shi Kanagawa 211-0067 (JP)
(74) Representative: Vossius & Partner
(86) International application number: PCT/JP2012/053867
(87) International publication number: WO 2012/111820

(57) **Abstract**

There is provided an ingredient of a tea drink which ingredient makes it possible to manufacture a tea drink that has a novel aroma and taste and that produces no unpleasant flavor associated with a heat treatment. The ingredient for a tea drink is manufactured by a method including the steps of impregnating a tea drink ingredient with an amino-acid solution that contains at least one amino acid selected from the group consisting of leucine, valine, and isoleucine, and heating the tea leaves at a temperature of 100 to 200°C.

## Description

### TECHNICAL FIELD

The present invention relates to a method for manufacturing an ingredient for a tea drink such as green tea, brown rice tea, and barley tea (hereinafter referred to as a "tea drink ingredient"), and particularly to a method for manufacturing a tea drink ingredient from which a container-packed tea drink having a pleasant flavor can be produced.

### BACKGROUND ART

Container-packed tea drinks are generally manufactured by extracting a tea extract from tea leaves and other ingredients for tea drinks such as brown rice tea and barley tea with an aqueous solvent such as water, adjusting the tea extract into a drinkable concentration, and then packing the extract in sealed containers such as cans and PET bottles to be sold. For long-term storage, that is, for prevention of microbial contamination, such container-packed tea drinks are typically subjected to thermal sterilization suitable for the material of the container. At present, the sterilization, however, significantly impairs the good flavor inherent in the tea drink.

In recent years, there has been an increasing demand for different tea drinks such as higher-grade ones, higher-quality ones, more functional ones, and ones having novel aromas and tastes, due to diversified consumer preferences in tea drinks. Studies have accordingly been performed on methods of processing and treating a tea drink ingredient.

The container-packed green tea drink stored for a long time has a problem of a significantly impaired flavor, in part under the influence of its thermal history such as thermal sterilization and storage under refrigeration. Several methods have been proposed for green tea leaves: Tea leaves rolled during a crude tea manufacturing process are sprayed with an extract prepared separately from tea leaves and the resulting tea leaves are dried (PTL 1); one of producing tea comprising, in a crude tea manufacturing process of steaming, pot-roasting, or withering raw tea leaves and then subjecting the resulting tea leaves to heating and rolling pressure treatments to reduce the moisture content of the tea leaves, a part of the tea leaves is taken out before completion of the heating and rolling pressure treatments, it is squeezed, and the resulting juice is sprayed on the tea leaves before completion of the heating and rolling pressure treatments (PTL 2); and aroma components obtained from tea is imparted to dried tea (PTL 3).

Barley tea drinks are desirable to have a harmonious balance between roasted aroma and sweet and mellow tastes. It is, however, difficult to manufacture barley tea drinks keeping sweet and mellow tastes in balance because starch contained in the raw material barley is easily solubilized to readily lose the harmonious balance in flavor, and in part because container-packed barley tea drinks stored for a long time is particularly affected by their thermal history such as thermal sterilization and storage under refrigeration. Several methods have been proposed for the raw material barley: After the raw material barley is roasted to remove an unpleasant aroma component, the barley is rapidly heated to swell and pregelatinize its albumen, and then the swollen and pregelatinized barley is impregnated with an aqueous solution containing one or more saccharides, amino acids, peptides, proteins, ammonium salts, and alkali salts followed by heating and roasting it at 100 to 170°C (PTL 4); and one or more amino acids are directly sprayed on the raw material barley in an amount of about 0.01 to 2% by weight, or the raw material barley is impregnated with one or more amino acids in suspension or solution followed by roasting the resulting barley at a temperature of about 190 to 280°C (PTL 5). PTL 4 discloses that the saccharides penetrating into the albumen is caramelized, that the amino acid(s) added promote thermal decomposition of albumin, and that the albumen which causes less thermal browning can be readily roasted by heat. One example describes a barley tea drink having higher amounts of aroma components prepared by spraying the raw material barley with an aqueous solution containing glucose as a saccharide and glycine, lysine and alanine as amino acids, adsorbing the solution on the barley, and roasting the resulting barley at 120 to 170°C. PTL 5 describes the use of acidic amino acids such as glutamic acid and aspartic acid or neutral amino acids such as glutamic acid, asparagine, alanine, and glycine in an amount of about 0.01 to 2.00% by weight, preferably about 0.10 to 0.50% by weight based on 100 parts by weight of the raw material barley. Some examples disclose a barley tea drink manufactured by atomizing a 2% by weight aqueous solution of glutamic acid on the raw material barley in an amount of 5 parts by weight based on 100 parts by weight of the barley, and then roasting the resulting barley up to a temperature of 240°C, and another barley tea drink manufactured by spraying a 3% by weight suspension of aspartic acid on the raw material barley in an amount of 7 parts by weight based on 100 parts by weight of the barley, and then roasting the resulting barley up to a temperature of 250°C.

Moreover, a method for manufacturing a buckwheat tea having enhanced savoriness after roasting is also proposed involving immersing whole grains of hulled buckwheat seeds in a suspension or an aqueous solution of a single amino acid, an amino acid mixture or an amino acid-based natural seasoning which is allowed to permeate the whole grains, and pregelatinizing them by steaming, and then drying the whole grains of the seeds followed by roasting and grinding (PTL 6).

### CITATION LIST

### PATENT LITERATURE

PTL 1: Japanese Patent Application Laid-Open Publication No.2005-204527
PTL 2: Japanese Patent Application Laid-Open Publication No.2007-082526
PTL 3: Japanese Patent Application Laid-Open Publication No. 63-137646
PTL 4: Japanese Patent Publication No. 50-003399
PTL 5: Japanese Patent Publication No. 63-014942
PTL 6: Japanese Patent Application Laid-Open Publication No. 2005-006569

### SUMMARY OF INVENTION

### TECHNICAL PROBLEM

An object of the present invention is to provide a tea drink ingredient that is favorable for the manufacture of a tea drink, and especially a container-packed tea drink with fine flavor, and in particular, to provide a tea drink ingredient that is favorable for the manufacture of a container-packed tea drink (especially green tea drink) having a novel scent and taste and having suppressed off-flavor caused by thermal degradation, a container-packed barley tea drink having enhanced roasted aroma and sweet and mellow tastes and having a harmonious balance in savoriness inherent in the barley, and a container-packed brown rice tea drink having enhanced roasted aroma and sweet and mellow tastes and having a harmonious balance in savoriness inherent in the brown rice.

### SOLUTION TO PROBLEM

The present inventors, who have diligently studied in order to solve the problems described above, found that impregnation of a tea drink ingredient with a solution of a specific amino acid followed by a heat treatment under certain conditions can readily and effectively enhance the flavor inherent in the tea drink ingredient. The present invention has been completed on the basis of these findings.

The present invention includes, but not limited to, the following aspects:
(1) A method for manufacturing a tea drink ingredient, comprising: impregnating a tea drink ingredient with an aqueous amino-acid solution that contains at least one amino acid selected from the group consisting of leucine, valine, and isoleucine, and subjecting the impregnated tea drink ingredient to a heat treatment at a temperature of 100 to 200°C;
(2) The method according to Aspect (1) wherein the tea drink ingredient comprises tea leaves, and the heat treatment is pan-drying;
(3) The method according to Aspect (1) wherein the tea drink ingredient is barley for tea, and the heat treatment is baking;
(4) The method according to Aspect (1) wherein the tea drink ingredient is brown rice for tea, and the heat treatment is roasting;
(5) The method according to any one of Aspects (1) to (4) wherein 45 mg or more of the amino acid per kg of the tea drink ingredient is added;
(6) The method according to any one of Aspects (1) to (5) wherein the amino acid solution is an extract of green tea leaves;
(7) The method according to aspect (6) wherein the extract of green tea leaves is subjected to an enzyme treatment;
(8) A method for manufacturing a tea drink, comprising: impregnating a tea drink ingredient with an aqueous amino-acid solution that contains at least one amino acid selected from the group consisting of leucine, valine, and isoleucine, subjecting the impregnated tea drink ingredient to a heat treatment at a temperature of 100 to 200°C, and extracting an aqueous extract with water from the heated tea drink ingredient;
(9) The method according to Aspect (8) wherein the tea drink ingredient is barley for tea, and the step of preparing the aqueous extract is conducted using 5 to 150 parts by weight of water per part by weight of the heated barley;
(10) The method according to Aspect (8) wherein the tea drink ingredient is brown rice, the method further comprises, before the step of preparing the aqueous extract, a step of combining the heated brown rice and green tea in a weight ratio of 2:8 to 8:2, and the step of preparing the aqueous extract is conducted using 5 to 150 parts by weight of water per part by weight of the mixture of the roasted brown rice and green tea.

### ADVANTAGEOUS EFFECTS OF INVENTION

The tea drink ingredient of the present invention can be used to manufacture tea drinks with fine flavor.

### BRIEF DESCRIPTION OF DRAWINGS

Figure 1 is a graph illustrating the composition of amino acids in the tea extract analyzed in Example 2.
Figure 2 is a graph illustrating the 2-methylbutanal content in a green tea drink prepared using an enzyme-treated green tea concentrate as an amino acid solution as in Example 5 except that the pan-roasting temperature is varied from 110 to 170°C.
Figure 3 illustrates the relations between the pan-roasting temperature and the contents of the components (2-methylbutanal and 2,5-dimethylpyrazine) in the manufacture of common Hojicha leaves. The peak area as used in Figures 2 and 3 is an area under curve of the peak from a test substance when analyzed.
Figure 4 is a flowchart illustrating an exemplary manufacturing process for brown rice for tea of the present invention.
Figure 5 is a flowchart illustrating another exemplary manufacturing process for brown rice for tea of the present invention.
Figure 6 is a flowchart illustrating another exemplary manufacturing process for brown rice for tea of the present invention.

### DESCRIPTION OF EMBODIMENTS

In the present invention as described above, a tea drink ingredient is impregnated with an aqueous solution containing a specific amino acid or amino acids (at least one amino acid selected from the group consisting of leucine, valine, and isoleucine), and then is subjected to a heat treatment at a temperature of 100 to 200°C. One aspect of the present invention is a method for manufacturing a tea drink ingredient, and another aspect is a method for manufacturing a tea drink using the resulting tea drink ingredient. The tea drink ingredient as used herein is any ingredient that can be subjected to extraction to obtain an extract as a tea drink, and examples of preferred embodiments include one selected from tea leaves, barley for tea, and brown rice for tea. The present invention will now be described in further detail by way of example with reference to these preferred ingredients.

### 1. Tea leaves

The method for manufacturing tea leaves according to the present invention involves impregnating raw material tea leaves with an aqueous solution containing a specific amino acid or amino acids (at least one amino acid selected from the group consisting of leucine, valine, and isoleucine), and then pan-drying the impregnated tea leaves at a temperature of 100 to 200°C. As mentioned above, in the description on the method for manufacturing tea leaves herein, the heat treatment in the present invention represents a "pan-drying treatment" for the tea leaves, unless otherwise stated. The tea leaves as used herein refer to tea leaves that are prepared from leaves and stalks of the tea plant (Scientific name: Camellia sinensis) and are provided as an ingredient for tea-based drinks after extraction with cold or warm water. In the present invention, tea leaves that are subjected to an amino acid-impregnating process described below is referred to as raw material tea leaves. Examples include unfermented steamed teas (green tea) such as sencha, bancha, hojicha, gyokuro, kabusecha, and tian cha; unfermented pot-roasted teas such as ureshino cha, aoyagi cha, and various Chinese teas; semifermented teas such as pouchong tea, Tie Guan Yin tea, and oolong tea; and fermented teas such as black tea, awa bancha, and Pu-er tea. Among them, preferred are unfermented teas (green tea) that significantly show an improved flavor caused by 2-methylbutanal and/or 3-methylbutanal in the present invention. In the present invention, any portion of the tea leaves that are subjected to extraction to prepare drinkable extracts can be suitably used, such as leaves and stalks. The tea leaves may also be in any form, such as large and powdery. The harvest time of the tea leaves can be selected in accordance with desired flavor. Preferred are third to fourth harvests.

### (Amino acid-impregnating process)

The present invention is characterized in that tea leaves are impregnated with an aqueous solution containing at least one amino acid selected from the group consisting of leucine (Leu), valine (Val), and isoleucine (Ile) (also referred to as "amino acid-impregnating process" hereinafter). The combination of such a specific amino acid or amino acids with the pan-drying process described below can enhance a pleasant soy sauce-like aroma. The tea leaves of the present invention provide excellent tea-based drinks having only enhanced pleasant roasted aroma without any burnt odors or discordant flavors.

Through studies by the present inventors revealed that this pleasant soy sauce-like aroma is produced when tea leaves are impregnated with an aqueous solution containing at least one amino acid selected from the group consisting of leucine (Leu), valine (Val), and isoleucine (Ile). In particular, leucine enhances not only roasted aroma but also the depth of aroma (also known as body feeling and mellow feeling), resulting in tea-based drinks that more significantly show an improved flavor. Therefore, in one preferred embodiment of the present invention, the aqueous amino-acid solution contains leucine, and even valine and/or isoleucine. More preferably, the aqueous amino-acid solution contains leucine, valine, and isoleucine. In the presence of these three amino acids leucine (Leu), valine (Val), and isoleucine (Ile) are present, the ratio Leu:Val:Ile = about 1:0.1-10:0.1-10, and preferably about 1:0.1-1.0:0.1-1.0.

The precise reason for the enhanced aroma of tea leaves in the present invention is not clear. Although not intending to be bound by the following inference, pleasant soy sauce-like aroma components 2-methylbutanal and/or 3-methylbutanal are probably enhanced by the present invention.

The roasted aroma (a soy sauce-like aroma) originated from leucine, valine and/or isoleucine is further enhanced by the combination with one or more amino acids selected from the group consisting of phenylalanine (Phe), glutamic acid (Glu), glycine (Gly), proline (Pro), and theanine (Theanine), resulting in a more improved flavor. In particular, phenylalanine shows a significantly deepened aroma and a significantly improved flavor. This deepened aroma not only increases mellow tastes of tea-based drinks, but also keeps the aroma even after the heat treatment in the manufacture of container-packed tea drinks, and masks heated odors associated with the heat treatment. The addition of one or more amino acids selected from the group consisting of phenylalanine, glutamic acid, glycine, proline, and theanine without leucine, valine, and isoleucine does not show any improvement in flavor such as keeping of aroma and masking of heated odors. It is believed that this improvement in flavor can be achieved by specific amino acids (leucine, valine, and isoleucine: hereinafter also collectively referred to as amino acid A) synergistically working with other specific amino acids (phenylalanine, glutamic acid, glycine, proline, and theanine: hereinafter also collectively referred to as amino acid B). Therefore, in the amino acid-impregnating process, the tea leaves of the present invention for a container-packed tea drink are preferably impregnated with an aqueous solution that contains at least one amino acid selected from the group consisting of leucine, valine, and isoleucine (preferably all the three amino acids leucine, valine, and isoleucine) and one or more amino acids selected from the group consisting of phenylalanine, glutamic acid, glycine, proline, and theanine.

The tea leaves can be impregnated with an aqueous amino-acid solution by any process that allows the amino acid to penetrate into or adhere to the raw material tea leaves. Examples of the impregnation include spraying, dispersing, or applying an aqueous amino-acid solution onto raw material tea leaves, and immersing tea leaves in an aqueous amino-acid solution. A preferred process involves spraying an aqueous amino-acid solution onto tea leaves and stirring the tea leaves from the point of view of uniform impregnation of tea leaves with the amino acid.

The aqueous amino-acid solution used in the present invention may be any liquid that contains an amino acid or amino acids, such as a suspension containing amino acid, and preferably an aqueous amino-acid solution containing dissolved amino acid in terms of ease in uniform impregnation of raw material tea leaves with an amino acid or amino acids. The concentration of amino acid(s) in the aqueous amino-acid solution may appropriately be adjusted depending on the solubility of the amino acid(s), and typically is adjusted such that the total amount of the amino acid (A), i.e., leucine, valine, and isoleucine is 0.01 to 10% by weight, and preferably 0.1 to 2% by weight based on the aqueous amino-acid solution. Moreover, in combination with the amino acid (B), i.e., one or more amino acids selected from the group consisting of phenylalanine, glutamic acid, glycine, proline, and theanine, which deepens roasted aroma caused by 2-methylbutanal and/or 3-methylbutanal, the total amount of the amino acid (B) is preferably adjusted so as to be 10 to 80% by weight, and preferably 15 to 25% by weight based on the total amount of the amino acids contained in the aqueous amino-acid solution (particularly, the total amount of 17 amino acids aspartic acid, glutamic acid, serine, glycine, histidine, arginine, threonine, alanine, proline, theanine, tyrosine, valine, methionine, isoleucine, leucine, lysine, and phenylalanine).

This impregnation is carried out in an amount of preferably 45 mg or more, more preferably 100 mg or more, further preferably 150 mg or more, and most preferably 200 mg or more of the amino acid (A) per kg of raw material tea leaves. At an amount of 45 mg or more, the resulting tea leaves can sufficiently produce a unique aroma (a soy sauce-like aroma) that is an object of the present invention and show an improved flavor. In the present invention, the total amount of the amino acid (A), i.e., leucine, valine, and isoleucine is preferably about 0.005 to 0.25% by weight, and more preferably about 0.05 to 0.1% by weight based on 100 parts by weight of the raw material tea leaves. The amount of the amino acid (A) has no upper limit, and typically 5000 mg or less, preferably 3000 mg or less, more preferably 2000 mg or less, and most preferably about 100 mg or less for 1 kg of the raw material tea leaves.

The amino acid used in the present invention may be purified amino acids, or crude or purified (including partially purified) plant extract containing amino acids. The plant extract is suitably exemplified by a green tea extract. Typically, the green tea extract contains many amino acids such as theanine, glutamic acid, aspartic acid, methionine, but is known to have small amounts of amino acid (A), i.e., valine, leucine, and isoleucine that are effective components of the present invention, and amino acid (B), i.e., phenylalanine, glycine, and proline that react with the amino acid (A) additively or synergistically and further improve flavor. Therefore, the green tea extract is preferably subjected to physical or chemical treatment to increase the concentrations of amino acid (A) and amino acid (B) for further processes. Examples of the physical or chemical treatments include enzyme treatment, acid treatment, high-temperature high-pressure treatment, refining treatment, and sonication. Among them, preferred is enzyme treatment because the reaction of the amino acid can be selectively controlled.

The enzyme treatment of the green tea extract may be carried out by any process that can increase the concentration of the amino acids in the extract by the action of enzyme on proteins and fiber in green tea leaves and/or tea extract. Examples of the enzyme treatment include enzyme extraction (a process of adding an enzyme to green tea leaves and mixing the mixture, and extracting an extract from the green tea leaves with water (hot water); or a process of extracting an extract from green tea leaves with water (hot water) containing an enzyme), or a method of extracting a green tea extract from green tea leaves with water (hot water), and adding an enzyme to the resulting green tea extract and mixing the mixture. Examples of the usable enzyme include proteases, α-amylases, cellulases, hemicellulases, pectinases, protopectinases, and glutaminases alone or in combination. The conditions of the enzyme treatment may be selected suitably in view of optimal conditions for the enzyme used.

When a green tea extract that contains large amounts of catechins is used as an aqueous amino-acid solution, bitter taste and astringency is produced in the extract during the baking process of the present invention, and off-flavor is produced during thermal sterilization in the manufacture of tea-based drinks. Thus, the green tea extract is preferably subjected to a process of removing catechins for use in the present invention. Catechins as used herein refer to the generic term for catechin, epicatechin, gallocatechin, epigallocatechin, catechin gallate, epicatechin gallate, gallocatechin gallate, and epigallocatechin gallate. In particular, catechins are removed until the total amount of catechins reaches 15.0% by weight or less, preferably 13.5% by weight or less, more preferably 10.0% by weight or less and most preferably 8.0% by weight or less based on the solid content from the tea leaves in the green tea extract. In addition, the Brix value (soluble solid content) in the tea extract is typically about 0.2 to 20%, preferably 5 to 20%, and more preferably 10 to 20%. Catechins may be removed by any process, for example, removal of catechins from the green tea extract through resins (adsorption), or putting green tea leaves in contact with an aqueous solvent to prepare an extract from the green tea leaves, and removing (discarding) the extract. Especially preferred is putting green tea leaves on contact with hot water to prepare an extract at elevated temperatures containing many catechins, and removing (discarding) the extract at elevated temperatures because catechins can be readily extracted at elevated temperature.

Tea leaves that are subjected to extraction to prepare tea-based drinks are manufactured through 1) a crude tea manufacturing process and 2) a finishing process. In 1) the crude tea manufacturing process, the crude tea is obtained through (i) plucking, (ii) fanning and heating, (iii) steaming, (iv) cooling, (v) pressing, (vi) primary rolling, (vii) rolling and twisting, (viii) middle rolling, (ix) final rolling, and (x) drying processes. In (ii) the fanning and heating process, to prevent degradation and maintain freshness, the raw leaves are fanned with damp air to help maintain their moisture and dissipate the heat given off by the fresh leaves. In (iii) the steaming process, the tea leaves are steamed to stop oxidases on the leaves from oxidizing the tea leaves and to remove grassy smell while keeping the color of tea leaves green. In (iv) the cooling process, air is blown over the streamed tea leaves at elevated temperature to rapidly and uniformly cool them to room temperature so as to preserve the luster and flavor of the tea leaves. In (v) the pressing process, in order to enhance the luster and flavor of the tea leaves and shorten the duration of the following primary rolling process, the tea leaves are pressed under dry, hot air to remove the steam dew on the tea leaves and to increase the drying effect. In (vi) the primary rolling process, to soften the tea leaves and to lower the internal moisture content, the tea leaves are rolled while having dry, hot air blown over them and applying pressure and appropriate friction and compression. In (vii) the rolling and twisting process, the tea leaves are pressed and rolled in a bundle with high pressure without applying heat (This process intends to break up tissues of the tea leaves to easily release their flavor components, and also make the moisture content uniform). Furthermore, in (viii) the middle rolling process, the tea leaves gathered into a bundle in the rolling and twisting process is disentangled while having dry, hot air blown over them, are twisted so as to be easily shaped in the following process, and are dried. In (ix) the final rolling process, the tea leaves are rolled in one direction only, similar to the action of manual rolling to be formed into an extended shape while drying the tea leaves to reduce the moisture content. Finally, in (x) the drying process, the moisture content of the tea leaves after the final rolling process (about 10 to 13%) is reduced up to about 5% by hot air drying. Moreover, 2) the finishing process includes the pre-roasting method (the crude tea is pan-dried, and then is sorted and shaped) or the post-roasting method (the crude tea is sorted and shaped, and then is pan-dried), in which the crude tea is made into "finished tea leaves".

Tea leaves (raw material tea leaves) that can be subjected to the amino acid-impregnating process of the present invention may be crude tea leaves or finished tea leaves. Also, they may be tea leaves prepared at any time point in the crude tea manufacturing process. Crude tea leaves after the process (x) is preferably used as raw material tea leaves, which is subjected to the amino acid-impregnating process and the pan-drying process from the points of view of the ease in impregnation of raw material tea leaves with an aqueous amino-acid solution and the ease in controlling the quality of the tea leaves.

### (Pan-drying process)

In the present invention, tea leaves impregnated with a specific aqueous amino-acid solution described above is subjected to pan-drying treatment at a temperature of 100 to 200°C. In the pan-drying process, the tea leaves having a few moisture contents are exposed to higher heat than that in the drying process, thereby unique roasted aroma (soy sauce-like aroma) is enhanced. The tea leaves that are highly pan-dried increase simple roasted aromas, that is, aromas next to burnt odors, and pleasant roasted aromas such as 2-methylbutanal and/or 3-methylbutanal become hardly perceptible; therefore, the tea leaves are desirably baked so that the amount of 2-methylbutanal and/or 3-methylbutanal contained is preferably 0.5 to 50 times, and more preferably 1 to 30 times that of a roasted aroma component 2,5- (or 2,6-) dimethylpyrazine.

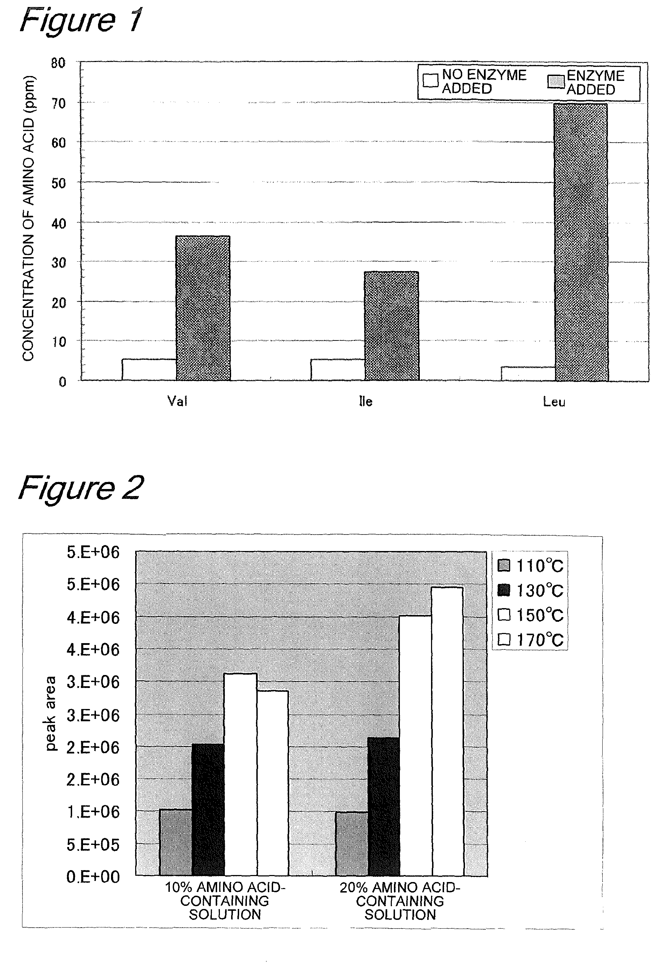

Through studies by the present inventors revealed that there tends to be no difference in the amount of 2- (or 3-) methylbutanal generated at a certain temperature zone or higher even if the pan-drying temperature is raised (See Fig. 2). On the contrary, if the pan-drying temperature is raised, 2,5- (or 2,6-) dimethylpyrazine that is a roasted aroma appears to increase abruptly. Therefore, an example of the process of adjusting the ratio of the content of 2-methylbutanal and/or 3-methylbutanal to the content of 2,5- (or 2,6-) dimethylpyrazine in the preferred range described above includes pan-roasting the amino acid-impregnated tea leaves so that the temperature of the tea leaves reaches 100 to 200°C, preferably 110 to 170°C, more preferably 130 to 160°C, and most preferably 130 to 150°C. The time until the temperature of amino acid-impregnated tea leaves reaches the temperature described above, that is, the pan-drying time varies depending on the equipment, and persons skilled in the art would be able to determine the time appropriately. For example, in the pan-drying process using a drum dryer, it is about 3 to 60 minutes, preferably 5 to 45 minutes, and more preferably 10 to 30 minutes after amino acid-impregnated tea leaves are loaded in a drum heated to a temperature higher than the pan-roasting temperature (the achieving temperature of the tea leaves). In addition, the content of 2-methylbutanal and 3-methylbutanal, and the content of 2,5- (or 2,6-) dimethylpyrazine in the pan-dried tea leaves can be measured by gas chromatography.

In the pan-drying process, any equipment can be used. For example, any type of pan-dryer such as a direct heating type and far-infrared type may be used. The pan-dryer also has any shape such as drum and plate. The moisture content in the tea leaves prepared in the pan-drying process typically about 5% or less, and preferably about 1% or less.

If crude tea leaves (or tea leaves prepared at any time point in the crude tea manufacturing process) are used as raw material tea leaves in the present invention, pan-drying in the finishing process can be performed as a pan-drying process in the present invention, which is a useful process from the point of view of workability. In this case, pan-drying may be performed by pre-roasting or post-roasting. From the points of view of quality control and workability, an especially preferred embodiment of the present invention is a method for manufacturing tea leaves including the amino acid-impregnating process of impregnating tea leaves rolled in the crude tea manufacturing process with an aqueous amino-acid solution, and then the pan-drying process by pan-drying in the finishing process.

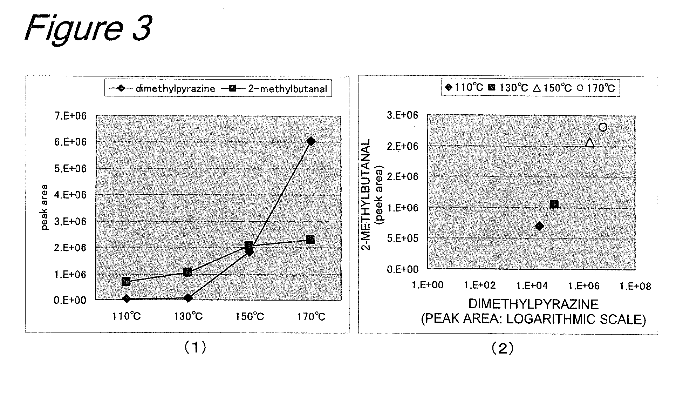

Hojicha leaves are known as tea leaves that are subjected to pan-drying treatment. Through studies by the present inventors revealed that in the general manufacture of hojicha leaves, the content of 2,5-dimethylpyrazine increases exponentially with stronger roasting, while the content of 2-methylbutanal increases proportionally (see Fig. 3(1)). That is, a high correlation between the logarithm of the amount of 2,5-dimethylpyrazine and the amount of 2-methylbutanal is observed (see Fig. 3(2)). However, from tea leaves prepared by the manufacture method of the present invention, that is, by impregnating raw material tea leaves with an aqueous solution containing a specific amino acid or amino acids (at least one amino acid selected from the group consisting of leucine, valine, and isoleucine), and then by pan-drying the impregnated tea leaves at a temperature of 100 to 200°C, novel tea leaves that contains 2-methylbutanal and 2,5-dimethylpyrazine in a ratio different from the conventional, and contains 2-methylbutanal in a higher ratio specifically to 2,5-dimethylpyrazine can be manufactured.

### (Manufacture of tea-based drinks)

The tea-based drink as used herein refers to a drink that contains an extract from tea leaves prepared according to the present invention with cold or warm water. Tea leaves for extraction of the tea-based drink of the present invention may consist of tea leaves alone after amino acid-impregnating treatment in the present invention, or may consist of tea leaves after amino acid-impregnating treatment in the present invention in combination with conventional tea leaves (that do not undergo amino acid-impregnating treatment). Specifically, the tea leaves of the present invention are present in an amount of 5 to 100% by weight, preferably 10 to 95% by weight, more preferably 15 to 90% by weight, and most preferably 20 to 85% by weight based on the total amount of the tea leaves that are an ingredient for extraction.

The extraction process of extracting from raw material tea leaves with an aqueous solvent is performed with any water such as tap water or deionized water at a temperature of water for extraction of preferably 40 to 95°C and more preferably 70 to 95°C. The preferred extraction ratio (weight ratio) is about 10 to 100 parts and preferably about 25 to 50 parts of water for extraction for 1 part by weight of raw material tea leaves. During extraction, the content may or may not be stirred.

In a preferred embodiment, the resulting tea extract is immediately filtered stepwise through a metallic mesh to remove residues such as used tea leaves, and the filtrate is cooled down to 10 to 40°C, for example, with a plate heat exchanger. Furthermore, insoluble components are preferably removed using a continuous centrifuge or by filtration through flannel, and the centrifugation is performed under typical conditions of 4000 to 9000 G. The centrifuge may take any form. Moreover, filtration through flannel can be performed, for example, using a flannel filter cloth.

Subsequently, if required, an antioxidant or a pH adjuster, such as L-ascorbic acid and sodium bicarbonate, may be added to the resulting filtrate to adjust preferably pH 5.0 to 7.0. The pH-adjusted extract may be diluted such that the soluble solid content (Brix value) in the final preparation becomes a desired value (for example, 0.1 to 0.5, preferably 0.2 to 0.4), to adjust the solid content concentration.

In a preferred embodiment, the resulting preparation is subjected to sterilization treatment in order to improve shelf life. The sterilization treatment may be performed after or before a hermetic container is filled with the preparation. The preparation may be contained in any container, such as a paper pack carton, a bottle, a can, and a PET bottle. The sterilization such as UHT sterilization, retort sterilization, and plate sterilization may be appropriately selected depending on the kind of container and storage conditions. Specifically, for containers such as cans and bottles that are filled with a preparation, and then are capable of undergoing thermal sterilization, retort sterilization can be employed under sterilization conditions stipulated in the Food Sanitation Law, while containers such as PET bottles and paper pack cartons that are incapable of undergoing retort sterilization are previously sterilized under sterilization conditions similar to those described above, for example, with a plate heat exchanger at elevated temperature for a short time, are then cooled down to a certain temperature, and are filled with a preparation by hot pack filling or filling under aseptic conditions.

The method for manufacturing a tea-based drink of the present invention also includes an embodiment of adding a tea extract prepared form tea leaves of the present invention as an additive for the tea-based drink, that is, as an aroma enhancer or a mellow taste enhancer. The embodiment includes preparing a tea extract from tea leaves of the present invention through the extraction process described above, and mixing this extract with a preparation of a tea-based drink (a preparation containing as a main component a tea extract prepared from other tea leaves).

The resulting container-packed tea-based drink produces roasted aroma that is believed to be caused by 2-methylbutanal and/or 3-methylbutanal originated from tea leaves of the present invention, and has fine flavor without heated odors. Moreover, a tea-based drink having a low Brix value (specifically, a tea-based drink with Brix 0.2% or less) has advantages in aroma of producing aroma as strong as or stronger than that of the conventional (with a high Brix value), and suppressing off-flavor caused by thermal degradation better than the conventional, and also has advantages of low turbidity and low precipitation during long-term storage. Further, a low-caffeine tea-based drink that has a low stimulation and low bitter taste of caffeine and is easy to regularly take (specifically, about 80 to 200 ppm, preferably about 80 to 160 ppm, more preferably about 80 to 130 ppm of caffeine-containing weight based on the total amount of the drink) can provide advantages in flavor of having mellow taste and fullness of taste as much as or more than those of the conventional (with a high caffeine-containing weight), and of suppressing bitter taste better than conventional ones.

The resulting container-packed tea-based drink that contains both a component (A) 2-methylbutanal and/or 3-methylbutanal and a component (B) 2,5-dimethylpyrazine and are prepared so that the total weight of the component (A) contained is 23 to 100 ppb (preferably 25 to 100 ppb, more preferably 27 to 100 ppb) based on the entire drink and the weight of the component (B) contained is 5 to 50 ppb (preferably 5 to 40 ppb, more preferably 5 to 30 ppb) is preferred, in particular in view of flavor.

These embodiments of the present invention can be regarded as a process of improving flavor of tea leaves or tea-based drinks from one aspect.

### 2. Barley for tea

The method for manufacturing barley for tea according to the present invention involves impregnating the raw material barley with an aqueous solution containing a specific amino acid or amino acids (at least one amino acid selected from the group consisting of leucine, valine, and isoleucine), and then baking the impregnated barley at a temperature of 100 to 200°C. As mentioned above, in the description on the method for manufacturing barley for tea herein, the heat treatment in the present invention represents a "baking treatment" for the barley, unless otherwise stated. The barley for tea as used herein refers to a baked barley prepared by baking the raw material barley such as wheat, barley, and rye. Barley such as two-row barley and six-row barley are suitably used as the raw material barley.

### (Amino acid-impregnating process)

The present invention is characterized in that the raw material barley is impregnated with an aqueous solution containing at least one amino acid selected from the group consisting of leucine (Leu), valine (Val), and isoleucine (Ile) (this process is also referred to as "amino acid-impregnating process" hereinafter). Any barley such as unroasted or roasted barley can be used as the raw material barley, and preferred is barley subjected to swelling treatment, and most preferred is barley subjected to popping treatment such that the aqueous amino-acid solution readily penetrates into swollen barley and popped barley. In the popping treatment, a part of the hull of barley is broken and the inner grain is cracked. The swelling treatment is performed under any conditions with any equipment that process the raw material barley such that albumen in the barley is swollen. Specifically, the swelling treatment is performed, for example, by heating for a short time (for example, at 150 to 300°C for 1 to 10 minutes).

In the present invention, the raw material barley is impregnated with the specific aqueous amino-acid solution and is then baked, which process enhances roasted aroma of barley tea. This can result in a barley tea drink having an enhanced roasted aroma without burnt odors or discordant flavors. Through studies by the present inventors revealed that such roasted aroma is produced by the use of an aqueous solution containing at least one amino acid selected from the group consisting of leucine, valine, and isoleucine. In particular, leucine produces roasted aroma and also has an effect of enhancing sweet and mellow tastes. In one preferred embodiment of the present invention, therefore, the amino-acid containing solution contains leucine, and even valine and/or isoleucine. Although the detailed reason for the enhanced roasted aroma of barley tea in the present invention is not clear and the inventors do not intend to be bound by the following inference, roasted aroma components 2-methylbutanal and/or 3-methylbutanal are probably enhanced by the present invention if the raw material barley is baked after being impregnated with a specific amino acid solution before the baking treatment.

The improved flavor produced by the use of leucine, valine and/or isoleucine is further enhanced by the combination with one or more amino acids selected from the group consisting of phenylalanine (Phe), glutamic acid (Glu), glycine (Gly), proline (Pro), and theanine (L-Theanine), which combination is effective, in particular, in enhanced mellow and sweet tastes. The addition of one or more amino acids selected from the group consisting of phenylalanine, glutamic acid, glycine, proline, and theanine without leucine, valine, and isoleucine does not show any improvement in flavor. It is believed that this improvement in flavor can be achieved by specific amino acids (leucine, valine, and isoleucine: hereinafter also collectively referred to as amino acid A) synergistically working with other specific amino acids (phenylalanine, glutamic acid, glycine, proline, and theanine: hereinafter also collectively referred to as amino acid B).

The raw material barley can be impregnated with an aqueous amino-acid solution by any process that allows the amino acid to penetrate into or adhere to the raw material barley. Examples of the impregnation include spraying, dispersing, or applying an aqueous amino-acid solution onto the raw material barley, and immersing the raw material barley in an aqueous amino-acid solution. A preferred process involves spraying an aqueous amino-acid solution onto the raw material barley and stirring the raw material barley from the point of view of uniform impregnation of the raw material barley with the amino acid.

The aqueous amino-acid solution used in the present invention may be any liquid that contains an amino acid or amino acids, such as an amino acid-containing suspension. An aqueous amino-acid solution containing dissolved amino acid is preferably used from the point of view of uniform impregnation of the raw material barley with the amino acid. The concentration of amino acid(s) in the aqueous amino-acid solution may appropriately be adjusted depending on the solubility of the amino acid(s), and typically is adjusted such that the total amount of the amino acid (A), i.e., leucine, valine, and isoleucine is in the range of 0.01 to 10% by weight, and preferably 0.1 to 2% by weight based on the aqueous amino-acid solution. Moreover, starch is eluted from the raw material barley during the extraction and may bring about paste feeling in the extract. Preferably, the paste feeling is significantly reduced by the combination of the amino acid (A) described above with one or more amino acids selected from the group consisting of phenylalanine, glutamic acid, glycine, proline, and theanine (hereinafter also collectively referred to as amino acid (B)). The combination of amino acid (A) with the amino acid (B) is prepared such that the total amount of amino acid (B) is preferably 10 to 80% by weight, and more preferably 15 to 25% by weight based on the total amount of amino acids (specifically, the total amount of 17 amino acids: aspartic acid, glutamic acid, serine, glycine, histidine, arginine, threonine, alanine, proline, theanine, tyrosine, valine, methionine, isoleucine, leucine, lysine, and phenylalanine) in the aqueous amino-acid solution.

One kilogram of the raw material barley is preferably impregnated with 45 mg or more of amino acid (A). The raw material barley impregnated with 45 mg or more of amino acid (A) can sufficiently enhance the roasted aroma characteristic to the present invention, and thereby can lead to production of a barley tea drink having a harmonious balance between roasted aroma and sweet and mellow tastes. In the present invention, the total amount of leucine, valine, and isoleucine is in the range of preferably about 0.005 to 0.25% by weight, and more preferably about 0.05 to 0.1 % by weight based on 100 parts by weight of the raw material barley.

The amino acid used in the present invention may be purified amino acids, or crude or purified (including partially purified form) plant extract containing amino acids. An exemplary plant extract is a green tea extract. Typically, the green tea extract contains many amino acids such as theanine, glutamic acid, aspartic acid, methionine, but is known to have small amounts of amino acid (A), i.e., valine, leucine, and isoleucine that are effective components of the present invention, and amino acid (B), i.e., phenylalanine, glycine, and proline that react with the amino acid (A) additively or synergistically and reduce paste feeling caused by starch. Therefore, the green tea extract is preferably subjected to physical or chemical treatment to increase the concentrations of amino acid (A) and amino acid (B). Examples of the physical or chemical treatment include enzyme treatment, acid treatment, high-temperature high-pressure treatment, refining treatment, and sonication. Among them, preferred is enzyme treatment because the reaction of the amino acid can be selectively controlled.

The enzyme treatment of the green tea extract may be carried out by any process that can increase the concentration of the amino acids in the extract by the action of enzyme on proteins and fiber in green tea leaves and/or tea extract. Examples of the enzyme treatment include enzyme extraction (a process of adding an enzyme to green tea leaves and mixing the mixture, and extracting an extract from the green tea leaves with water (hot water); or a process of extracting an extract from green tea leaves with water (hot water) containing an enzyme), or a method of extracting a green tea extract from green tea leaves with water (hot water), and adding an enzyme to the resulting green tea extract and mixing the mixture. Examples of the usable enzyme include proteases, α-amylases, cellulases, hemicellulases, pectinases, protopectinases, and glutaminases alone or in combination. The conditions of the enzyme treatment may be selected suitably in view of optimal conditions for the enzyme used.

When a green tea extract that contains large amounts of catechins is used as an aqueous amino-acid solution, bitter taste and astringency are produced in the extract during the baking process of the present invention, and off-flavor is produced during thermal sterilization in the manufacture of tea drinks. Thus, the green tea extract is preferably subjected to a process of removing catechins for use in the present invention. Catechins as used herein refer to the generic term for catechin, epicatechin, gallocatechin, epigallocatechin, catechin gallate, epicatechin gallate, gallocatechin gallate, and epigallocatechin gallate. In particular, catechins are removed until the total amount of catechins reaches 15.0% by weight or less, preferably 13.5% by weight or less, more preferably 10.0% by weight or less and most preferably 8.0% by weight or less based on the solid content from the tea leaves in the green tea extract. In addition, the Brix value (soluble solid content) in the tea extract is in the range of typically about 0.2 to 20%, preferably 5 to 20%, and more preferably 10 to 20%. Catechins may be removed by any process, for example, removal of catechins from the green tea extract through resins (adsorption), or putting green tea leaves in contact with an aqueous solvent to prepare a green tea leaf extract, and removing (discarding) the extract. Especially preferred is putting green tea leaves on contact with hot water to prepare an extract at elevated temperatures, and removing (discarding) the extract at elevated temperatures because catechins can be readily extracted at elevated temperature.

### (Baking process)

In the present invention, barley impregnated with a specific aqueous amino-acid solution described above is subjected to baking treatment at a temperature of 100 to 200°C. The impregnated barley is baked in such a state that some moisture remains therein by greater heat than that during drying, which treatment can probably enhance a roasted aroma component, 2-butanal, of barley tea. The deeply baked impregnated barley increases simple roasted aromas, that is, aromas next to burnt odors, which may prevent perception of pleasant roasted aromas such as 2-butanal. Therefore, the impregnated barley is desirably baked such that 2-methylbutanal and/or 3-methylbutanal contained is preferably 0.5 to 50 times, and more preferably 1 to 30 times that of the simple roasted aroma component 2,5- (or 2,6-) dimethylpyrazine. The content of 2-butanal and the content of 2,5- (or 2,6-) dimethylpyrazine in the baked barley can be measured by gas chromatography.

A method for baking an impregnated barley to control the content of 2-butanal and the content of 2,5- (or 2,6-) dimethylpyrazine within the range described above specifically includes heating the amino acid-impregnated barley such that the temperature of the barley reaches 100 to 200°C, preferably 110 to 170°C, and more preferably 130 to 150°C. Any equipment and method can be used for baking without limitation. Typical examples of such a method used for roasting barley for tea include sunairi (hot sand) roasting, fukureiri (swelling) roasting, katairi (non-swelling) roasting, pregelatinization roasting, and charcoal roasting. In a preferred embodiment, the barley is subjected to fukureiri-roasting to perform swelling (popping) treatment, impregnation with an amino acid solution, and again baking by fukureiri roasting; or pregelatinization-roasting to perform swelling and pregelatinization treatment, impregnation with an amino acid solution, and fukureiri roasting.

The moisture content in the resulting baked barley is preferably about 5% or less, and more preferably about 1% or less.

### (Method for manufacturing barley tea drinks)

The barley tea drink as used herein refers to a drink that contains an extract from barley for tea prepared according to the present invention with cold or warm water. In the present invention, a barley tea drink can be extracted from the barley for tea prepared according to the present invention described above with any water such as tap water or deionized water at an extraction temperature of preferably 75 to 100°C, preferably 80 to 95°C. During extraction, the content may or may not be stirred.

The extract is prepared at an extraction ratio (by weight) of 5 to 150 parts, and preferably 5 to 30 parts of water per part of the barley for tea. Moreover, the extraction duration in the present invention varies, depending on the extraction temperature, from about 3 to 60 minutes, and preferably from about 5 to 30 minutes.

In a preferred embodiment, the resulting barley tea extract is immediately filtered stepwise through a metallic mesh to remove residues such as used tea leaves, and the filtrate is cooled down to 10 to 40°C, for example, with a plate heat exchanger. Furthermore, insoluble components are preferably removed using a continuous centrifuge or by filtration through flannel, and the centrifugation is performed under typical conditions of 4000 to 9000 G. The centrifuge may take any form, and preferred is a three-phase centrifuge that can remove oil components floating on the top of the barley tea extract. Moreover, filtration through flannel can be performed, for example, using a flannel filter cloth.

Subsequently, if required, an antioxidant or a pH adjuster, such as L-ascorbic acid and sodium bicarbonate, may be added to the resulting filtrate to adjust pH 5.0 to 7.0. The pH-adjusted extract may be diluted such that the soluble solid content (Brix value) in the final preparation becomes a desired value (0.1 to 0.5, preferably 0.1 to 0.3), to adjust the solid content concentration.

In a preferred embodiment, the resulting preparation is subjected to sterilization treatment in order to improve shelf life. The sterilization treatment may be performed after or before a hermetic container is filled with the preparation. The preparation may be contained in any container, such as a paper pack carton, a bottle, a can, and a PET bottle. The sterilization such as UHT sterilization, retort sterilization, and plate sterilization may be appropriately selected depending on the kind of container and storage conditions. Specifically, containers such as cans and bottles that are filled with a preparation and can undergo thermal sterilization can be retort-sterilized under sterilization conditions stipulated in the Food Sanitation Law, while containers such as PET bottles and paper pack cartons that cannot undergo retort sterilization are previously sterilized under sterilization conditions similar to those described above, for example, with a plate heat exchanger at elevated temperature for a short time, are then cooled down to a certain temperature, and are filled with a preparation by hot pack filling or filling under aseptic conditions.

Barley tea drinks, in particular manufactured using swollen barley as an ingredient is known to have problems of excess extraction of starch components, which leads to pasty barley tea drinks. In particular, container-packed barley tea drinks that are refrigerated at room temperature or less (preferably 20°C or less, more preferably 15°C or less, and most preferably 10°C or less) until just before service, have problems of impairing their mouth feel and aftertaste after drinking (pleasant taste) due to their significant sticky feeling caused by starch. The present inventors have found that 2-methylbutanal and/or 3-methylbutanal reduce paste feeling (sticky feeling) caused by starch in the drink. The barley for tea of the present invention enhances 2-methylbutanal and/or 3-methylbutanal; therefore, the barley tea drink of the present invention manufactured using an extract from such barley does not impair roasted aroma, but reduces paste feeling caused by starch, and has a fine flavor.

The paste feeling is more significantly improved by the combination with one or more amino acids selected from the group consisting of phenylalanine, glutamic acid, glycine, proline, and theanine in the amino acid-impregnating process in the manufacture of barley for tea. Also, from the point of view of a reduction in paste feeling caused by starch in the barley tea extract, the raw material barley is preferably impregnated with an aqueous solution containing one or more amino acids (B) selected from the group consisting of phenylalanine, glutamic acid, glycine, proline, and theanine, in addition to one or more amino acids (A) selected from the group consisting of leucine, valine, and isoleucine, in the amino acid-impregnating process.

These embodiments of the present invention can be regarded as a process of improving flavor of barley tea or barley for tea, and a process of reducing paste feeling of barley tea from one aspect.

### 3. Brown rice for tea

Brown rice tea drinks are generally prepared by steaming, drying, and roasting milled rice; mixing the resulting rice (referred to as "roasted rice tea", and, for convenience's sake, also referred to as "brown rice" hereinafter) with green tea; and extracting an extract from the resulting mixture with hot water. A harmonious balance between roasted aroma from brown rice and green tea's flavor is known to make brown rice tea drinks taste delicious. The brown rice for tea in the present invention refers to roasted rice used in combination with green tea in the manufacture of the brown rice tea drink.

The method for manufacturing brown rice for tea according to the present invention involves allowing an aqueous solution containing a specific amino acid or amino acids (at least one amino acid selected from the group consisting of leucine, valine, and isoleucine) to penetrate brown rice, and then roasting the brown rice at a temperature of 100 to 200°C. As mentioned above, in the description on the method for manufacturing brown rice for tea herein, the heat treatment in the present invention represents a "roasting treatment" for the brown rice, unless otherwise stated. Any variety of raw materials for brown rice (raw material rice) can be used, and one or more varieties, for example, Japonica-type rice, Indica-type rice, and an intermediate thereof, non-glutinous rice, and glutinous rice may be used in accordance with the desired flavor. Preferred is non-glutinous rice that plainly shows advantageous effects of the present invention.

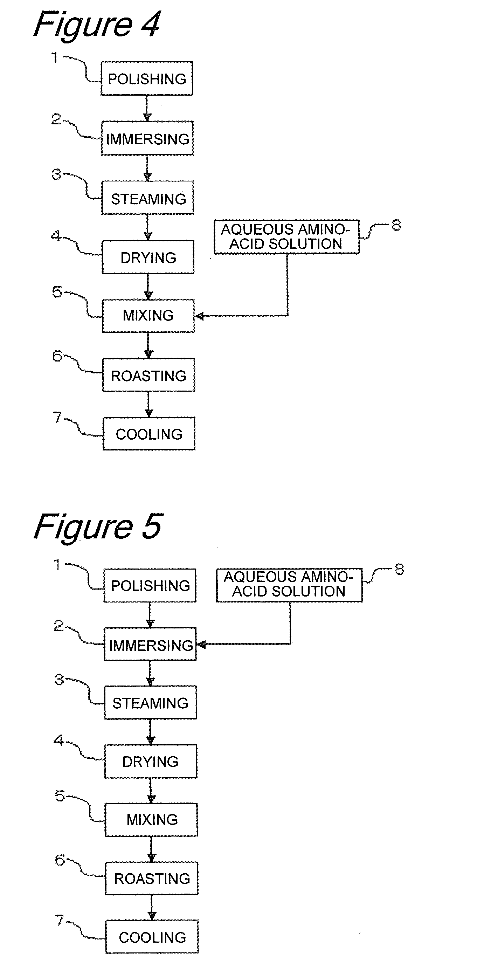

Examples of specific embodiments of brown rice for tea using amino acid(s) according to the present invention will now be described with reference to the drawings. Figs. 4 to 6 each are a flow diagram that shows an example of the manufacturing process of brown rice for tea according to the embodiment, wherein brown rice for tea is manufactured through polishing, immersing, steaming, drying, mixing, roasting, and cooling processes.

First, the polishing process (step 1) involves removing hulls from kernels of brown rice of choice, and whitening abrasively the dehulled brown rice to prepare polished rice. Brown rice may be polished in any polishing rate, and preferred is brown rice polished in a polishing rate of 90% or more, that is, the so-called polished rice. The immersing process (step 2) involves immersing the polished rice prepared in the step 1 in water to make it easy to steam the polished rice. The polished rice is immersed under preferred conditions, that is, in water at 10 to 40°C for about 1 to 24 hours, and preferably about 1 to 3 hours. After the immersing process, the immersed rice is taken out from water. Then, the steaming process (step 3) involves steaming the immersed rice with steam at about 100°C for about 10 to 120 minutes, and preferably about 10 to 30 minutes. After the steaming process, the drying process (step 4) involves drying the steamed rice discretely to keep the grains of the rice apart. The steamed rice is dried at a temperature of 120 to 180°C until the moisture content in the rice reaches about 0.1 to 10%.

In the present invention, the rice is impregnated with an aqueous solution containing at least one amino acid selected from the group consisting of leucine (Leu), valine (Val), and isoleucine (Ile) as an amino acid (hereinafter also collectively referred to as amino acid (A)). The aqueous amino-acid solution used in the present invention may be any liquid that contains an amino acid or amino acids, such as an amino acid-containing suspension. An aqueous amino-acid solution containing dissolved amino acid is preferably used from the point of view of uniform mixture of the raw material brown rice with the amino acid.

In the embodiments in Figs. 4 to 6, in parallel with these steps of treating the raw material rice, an aqueous amino-acid solution is prepared in the step 8. In preferred embodiments, the aqueous amino-acid solution is prepared such that the total amount of amino acid (A), i.e., leucine, valine, and isoleucine is 0.01 to 10% by weight, and preferably 0.1 to 2% by weight in the aqueous amino-acid solution.

Moreover, starch is eluted from brown rice during the extraction and may bring about paste feeling in the extract. Preferably, the paste feeling is significantly reduced by the combination of the amino acid (A) described above with one or more amino acids selected from the group consisting of phenylalanine, glutamic acid, glycine, proline, and theanine (hereinafter also collectively referred to as amino acid (B)). The combination of amino acid (A) with the amino acid (B) is prepared such that the total amount of amino acid (B) is preferably 10 to 80% by weight, and more preferably 15 to 25% by weight based on the total amount of amino acids (specifically, the total amount of 17 amino acids: aspartic acid, glutamic acid, serine, glycine, histidine, arginine, threonine, alanine, proline, theanine, tyrosine, valine, methionine, isoleucine, leucine, lysine, and phenylalanine) in the aqueous amino-acid solution.

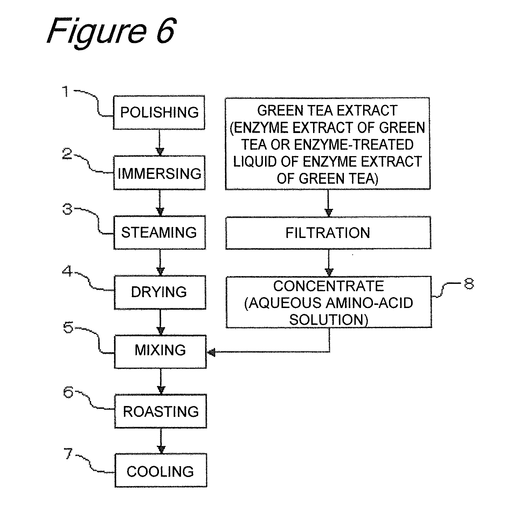

The mixing process (step 5) in Figs. 4 and 6 involves mixing and impregnating rice prepared in the step 4 tender enough to allow for moisture penetration by steaming (hereinafter also referred to as "raw material brown rice") with an aqueous amino-acid solution prepared in the step 8.

In the present invention, the raw material brown rice can be impregnated with an aqueous amino-acid solution by any process that allows the amino acid to penetrate into or adhere to the raw material brown rice. Examples of the impregnation include spraying, dispersing, or applying an aqueous amino-acid solution onto the raw material brown rice, and immersing the raw material brown rice in an aqueous amino-acid solution. A preferred process involves spraying an aqueous amino-acid solution onto the raw material brown rice and stirring the brown rice from the point of view of uniform impregnation of the raw material brown rice with the amino acid.

In the present invention, 1 kg of the raw material brown rice is preferably impregnated with 45 mg or more of amino acid (A). The raw material brown rice impregnated with 45 mg or more of amino acid (A) can sufficiently enhance the roasted aroma characteristic to the present invention, and thereby can lead to production of a brown rice tea drink having a harmonious balance between roasted aroma and sweet and mellow tastes. In the present invention, the total amount of leucine, valine, and isoleucine is in the range of preferably about 0.005 to 0.25% by weight, and more preferably about 0.05 to 0.1 % by weight based on 100 parts by weight of the raw material brown rice.

Next, in the present invention, the brown rice impregnated with the aqueous amino-acid solution described above is roasted at a temperature of 100 to 200°C. The impregnated brown rice is roasted in such a state that some moisture is contained therein by greater heat than that during drying, which treatment can probably enhance roasted aroma components, 2-butanal and/or 3-butanal, of brown rice tea. The deeply roasted impregnated brown rice increases simple roasted aromas, that is, aromas next to burnt odors, which may prevent perception of pleasant roasted aromas such as 2-butanal and/or 3-butanal. Therefore, the impregnated brown rice is desirably roasted such that 2-methylbutanal and/or 3-methylbutanal contained is preferably 0.5 to 50 times, and more preferably 1 to 30 times that of the simple roasted aroma component 2,5- (or 2,6-) dimethylpyrazine. The contents of 2-butanal and 3-butanal and the content of 2,5- (or 2,6-) dimethylpyrazine in the roasted brown rice can be measured by gas chromatography.

A method for roasting an impregnated brown rice to control the content of 2-butanal and/or 3-butanal and the content of 2,5- (or 2,6-) dimethylpyrazine within the range described above specifically includes heating the amino acid-impregnated brown rice such that the temperature of the brown rice reaches 100 to 200°C, preferably 110 to 170°C, and more preferably 130 to 150°C. Any equipment and method can be used for roasting without limitation. Typical examples of such a method used for roasting brown rice for tea include fukureiri (swelling) roasting and katairi (non-swelling) roasting.

In the embodiments in Figs. 4 to 6, the brown rice is roasted in the step 6, and the roasted rice is cooled in the step 7. When taken out of the pot after roasting, the raw material can ignite; therefore, the cooling in the step 7 is intended to prevent the raw material from igniting.

The moisture content in the resulting roasted brown rice is preferably about 5% or less, and more preferably about 1% or less.

Moreover, during the process of immersing the polished brown rice in water (step 2) in the present invention, the brown rice may be impregnated with a specific amino acid or amino acids. In an embodiment shown in Fig. 5, which replaces water with an aqueous amino-acid solution, the polished brown rice is immersed in the aqueous amino-acid solution to impregnate the brown rice with the amino acid. In this case, however, the brown rice is less impregnated with the amino acid, and is required to take a longer time for the immersion; therefore, the rice steamed tender is preferably impregnated with an aqueous amino-acid solution as shown in Fig. 4 or 6.

In the present invention, the amino acid-impregnation of the brown rice may be performed multi-step wise; for example, also by immersing the polished brown rice in an aqueous amino-acid solution, and then steaming the immersed polished brown rice tender and further impregnating it with the aqueous amino-acid solution followed by roasting.

In the present invention, the raw material brown rice is impregnated with the specific aqueous amino-acid solution described above and is then roasted under specific conditions, which process enhances roasted aroma of brown rice tea. This can result in a brown rice tea drink having an enhanced roasted aroma without burnt odors or discordant flavors. Through studies by the present inventors revealed that such roasted aroma is produced by the use of an aqueous solution containing at least one amino acid selected from the group consisting of leucine, valine, and isoleucine. In particular, leucine produces roasted aroma and also has an effect of enhancing sweet and mellow tastes. In one preferred embodiment of the present invention, therefore, the amino-acid containing solution contains leucine, and even valine and/or isoleucine. Although the detailed reason for the enhanced roasted aroma of brown rice tea in the present invention is not clear and the inventors do not intend to be bound by the following inference, roasted aroma components 2-methylbutanal and/or 3-methylbutanal are probably enhanced by the present invention if the raw material brown rice is roasted after being impregnated with a specific amino acid solution before the baking treatment.

The improved flavor produced by the use of leucine, valine and/or isoleucine is further enhanced by the combination with one or more amino acids selected from the group consisting of phenylalanine (Phe), glutamic acid (Glu), glycine (Gly), proline (Pro), and theanine (Theanine), which combination is effective, in particular, in enhanced mellow and sweet tastes. The addition of one or more amino acids selected from the group consisting of phenylalanine, glutamic acid, glycine, proline, and theanine without leucine, valine, and isoleucine does not show any improvement in flavor. It is believed that this improvement in flavor can be achieved by specific amino acids (leucine, valine, and isoleucine: amino acid A) synergistically working with other specific amino acids (phenylalanine, glutamic acid, glycine, proline, and theanine: amino acid B).

The amino acid used in the step 8 may be purified amino acids, or crude or purified (including partially purified) plant extract containing amino acids. In an embodiment shown in Fig. 6, which uses a green tea extract as an amino acid-containing solution, the green tea extract is subjected to filtration and concentration, and then the polished brown rice is impregnated with the resulting concentrated green tea extract. The amino acid-containing plant extract is suitably exemplified by a green tea extract. Typically, the green tea extract contains many amino acids such as theanine, glutamic acid, aspartic acid, methionine, but is known to have small amounts of amino acid (A), i.e., valine, leucine, and isoleucine that are effective components of the present invention, and amino acid (B), i.e., phenylalanine, glycine, and proline that react with the amino acid (A) additively or synergistically and reduce paste feeling caused by starch. Therefore, the green tea extract is preferably subjected to physical or chemical treatment to increase the concentrations of amino acid (A) and amino acid (B) for further processes. Examples of the physical or chemical treatments include enzyme treatment, acid treatment, high-temperature high-pressure treatment, refining treatment, and sonication. Among them, preferred is enzyme treatment because the reaction of the amino acid can be selectively controlled.

The enzyme treatment of the green tea extract may be carried out by any process that can increase the concentration of the amino acids in the extract by the action of enzyme on proteins and fiber in green tea leaves and/or tea extract. Examples of the enzyme treatment include enzyme extraction (a process of adding an enzyme to green tea leaves and mixing the mixture, and extracting an extract from the green tea leaves with water (hot water); or a process of extracting an extract from green tea leaves with water (hot water) containing an enzyme), or a method of extracting a green tea extract from green tea leaves with water (hot water), and adding an enzyme to the resulting green tea extract and mixing the mixture. Examples of the usable enzyme include proteases, α-amylases, cellulases, hemicellulases, pectinases, protopectinases, and glutaminases alone or in combination. The conditions of the enzyme treatment may be selected suitably in view of optimal conditions for the enzyme used.

When a green tea extract that contains large amounts of catechins is used as an aqueous amino-acid solution, bitter taste and astringency is produced in the extract during the roasting process of the present invention, and off-flavor is produced during thermal sterilization in the manufacture of tea drinks. Thus, the green tea extract is preferably subjected to a process of removing catechins for use in the present invention. Catechins as used herein refer to the generic term for catechin, epicatechin, gallocatechin, epigallocatechin, catechin gallate, epicatechin gallate, gallocatechin gallate, and epigallocatechin gallate. In particular, catechins are removed until the total amount of catechins reaches 15.0% by weight or less, preferably 13.5% by weight or less, more preferably 10.0% by weight or less and most preferably 8.0% by weight or less based on the solid content from the tea leaves in the green tea extract. In addition, the Brix value (soluble solid content) in the tea extract is typically about 0.2 to 20%, preferably 5 to 20%, and more preferably 10 to 20%. Catechins may be removed by any process, for example, removal of catechins from the green tea extract through resins (adsorption), or putting green tea leaves in contact with an aqueous solvent to prepare a green tea leaf extract, and removing (discarding) the extract. Especially preferred is putting green tea leaves on contact with hot water to prepare an extract at elevated temperatures, and removing (discarding) the extract at elevated temperatures because catechins can be readily extracted at elevated temperature.

### (Method for manufacturing brown rice tea drinks)

The brown rice tea drink as used herein refers to a drink that contains an extract from brown rice for tea prepared according to the present invention. A preferred embodiment includes a drink prepared by mixing the brown rice for tea according to the present invention with green tea, and extracting and extract from the mixture with cold or warm water. The combination ratio by weight of brown rice to green tea is about 2:8 to 8:2, preferably about 3:7 to 8:2, and more preferably about 4:6 to 8:2.

Brown rice for extraction of the brown rice tea drink of the present invention may consists of the amino acid-impregnated brown rice in the present invention, or may consists of the amino acid-impregnated brown rice in the present invention in combination with conventional brown rice tea (that do not undergo amino acid-impregnating treatment). Specifically, the brown rice for tea of the present invention are present in an amount of 10 to 100% by weight, and preferably 50 to 100% by weight based on the total amount of the brown rice that is an ingredient for extraction.

The brown rice for tea of the present invention may be mixed with any green tea. The green tea may appropriately be selected depending on desired flavors. Specifically, sencha, gyokuro, kabusecha, hojicha, fukamushicha, kamairicha, tamaryokucha, tencha, kukicha, matcha, konacha and the like are used. A brown rice tea drink can be prepared by extracting from the ingredient for extraction in combination of brown rice with green tea with any water such as tap water or deionized water at an extraction temperature of water of preferably 75 to 100°C, preferably 80 to 95°C. During extraction, the content may or may not be stirred. The extract is prepared at an extraction ratio (by weight) of 5 to 150 parts, and preferably 5 to 30 parts of water per part of the ingredient for extraction. Moreover, the extraction duration in the present invention varies, depending on the extraction temperature, from about 3 to 60 minutes, and preferably from about 5 to 30 minutes.

In a preferred embodiment, the resulting brown rice tea extract is immediately filtered stepwise through a metallic mesh to remove residues such as used tea leaves, and the filtrate is cooled down to 10 to 40°C, for example, with a plate heat exchanger. Furthermore, insoluble components are preferably removed using a continuous centrifuge or by filtration through flannel, and the centrifugation is performed under typical conditions of 4000 to 9000 G. The centrifuge may take any form, and preferred is a three-phase centrifuge that can remove oil components floating on the top of the brown rice tea extract. Moreover, filtration through flannel can be performed, for example, using a flannel filter cloth.

Subsequently, if required, an antioxidant or a pH adjuster, such as L-ascorbic acid and sodium bicarbonate, may be added to the resulting filtrate to adjust pH 5.0 to 7.0. The pH-adjusted extract may be diluted such that the soluble solid content (Brix value) in the final preparation becomes a desired value (0.1 to 0.5, preferably 0.1 to 0.3), to adjust the solid content concentration.

In a preferred embodiment, the resulting preparation is subjected to sterilization treatment in order to improve shelf life. The sterilization treatment may be performed after or before a hermetic container is filled with the preparation. The preparation may be contained in any container, such as a paper pack carton, a bottle, a can, and a PET bottle. The sterilization such as UHT sterilization, retort sterilization, and plate sterilization may be appropriately selected depending on the kind of container and storage conditions. Specifically, for containers such as cans and bottles that are filled with a preparation, and then are capable of undergoing thermal sterilization, retort sterilization can be employed under sterilization conditions stipulated in the Food Sanitation Law, while containers such as PET bottles and paper pack cartons that are incapable of undergoing retort sterilization are previously sterilized under sterilization conditions similar to those described above, for example, with a plate heat exchanger at elevated temperature for a short time, are then cooled down to a certain temperature, and are filled with a preparation by hot pack filling or filling under aseptic conditions.

Barley tea drinks, in particular manufactured using swollen barley as an ingredient is known to have problems of extraction of starch components, which leads to a pasty mouth feel. In particular, container-packed brown rice tea drinks that are refrigerated at room temperature or less (preferably 20°C or less, more preferably 15°C or less, and most preferably 10°C or less) until just before service, have problems of impairing their mouth feel and aftertaste after drinking (pleasant taste) due to their significant sticky feeling caused by starch. The present inventors have found that 2-methylbutanal and/or 3-methylbutanal reduce paste feeling (sticky feeling) caused by starch in the drink. The brown rice for tea of the present invention enhances 2-methylbutanal and/or 3-methylbutanal; therefore, the barley tea drink of the present invention manufactured using an extract from such barley does not impair roasted aroma, but reduces paste feeling caused by starch, and has a fine flavor.

The paste feeling is more significantly improved by the combination with one or more amino acids selected from the group consisting of phenylalanine, glutamic acid, glycine, proline, and theanine in the amino acid-impregnating process in the manufacture of brown rice for tea. Also, from the point of view of a reduction in paste feeling caused by starch in the brown rice tea extract, the raw material brown rice is preferably impregnated with an aqueous solution containing one or more amino acids (B) selected from the group consisting of phenylalanine, glutamic acid, glycine, proline, and theanine, in addition to one or more amino acids (A) selected from the group consisting of leucine, valine, and isoleucine, in the amino acid-impregnating process.

Further, the present inventors have found that 2-methylbutanal and/or 3-methylbutanal can mask unpleasant flavors caused by thermal sterilization of a green tea extract. The brown rice tea drink of the present invention manufactured by mixing brown rice for tea having an enhanced 2-methylbutanal and/or 3-butanal with green tea and extracting from the resulting brown rice tea is a tea drink that has fine flavor with off-flavors and odors such as heated odors masked during long-term storage.

These embodiments of the present invention can be regarded as a process of improving flavor of brown rice tea or brown rice for tea, and a process of reducing paste feeling of brown rice tea from one aspect.

### EXAMPLES

The present invention will now be described in detail by way of examples, which should not be construed as limiting the present invention should not be limited thereto. Unless otherwise stated, all concentrations are based on weight, and numerical ranges include their endpoints.

### Example 1. Manufacture of a green tea drink-Addition of an amino acid

A 1% aqueous solution of each of various amino acids was prepared. For the preparation, the following 17 amino acids were used: (i) aspartic acid (Asp), (ii) glutamic acid (Glu), (iii) serine (Ser), (iv) glycine (Gly), (v) histidine (His), (vi) arginine (Arg), (vii) threonine (Thr), (viii) alanine (Ala), (ix) proline (Pro), (x) theanine (Theanin), (xi) tyrosine (Tyr), (xii) valine (Val), (xiii) methionine (Met), (xiv) isoleucine (Ile), (xv) leucine (Leu), (xvi) lysine (Lys), and (xvii) phenylalanine (Phe) (all in the L-form avaialble from NACALAI TESQUE, INC.).

Green tea leaves before pan-roasting (crude tea; Sanbancha (the third crop of tea leaves), Yabukita) (raw material tea leaves) each were spray-impregnated with an aqueous amino-acid solution prepared in a weight ratio of the raw material tea leaves: the aqueous amino-acid solution of 1:0.2, and then were subjected to pan-drying on a pan-roaster. The pan-drying conditions are as follows:
- Pan roaster: Terada Seisakusyo, TR-10
- Drum temperature: 200°C
- Revolution number of drum: 12 rpm
- Pan-roasting time: 15 to 20 minutes
- Pan-roasting temperature: 150°C
where, the pan-roasting time refers to a time period between loading the amino acid-impregnated tea leaves on a pan-roaster and unloading them from the pan-roaster, and the pan-roasting temperature refers to an end-point temperature of the tea leaves.
Control tea leaves for drinks were also prepared in a similar manner except that the aqueous amino-acid solution was replaced with water.

The 17 tea leaves spray-impregnated with an amino acid and then pan-dried, and the control tea leaves each were weighed 2g, and respective extracts (Brix: 0.25%) were obtained by extracting from these tea leaves with 200 g of hot water for 5 minutes.

Sensory evaluations were conducted for these resulting green tea extracts, and results are shown in Table 1. These green tea extracts were rated in 4 grades based on the following evaluation criteria: X (comparable with the control), Δ (slightly enhanced pleasant aroma), ○ (enhanced pleasant aroma), and ⊚ (significantly enhanced pleasant aroma). As is clear from Table 1, neutral amino acids Val, Ile, and Leu that each have a molecular weight of 100 or more and an alkyl chain, produced a unique soy sauce-like aroma perceived to be pleasant without any burnt odors or discordant flavors, and of enhancing pleasant roasted aroma. In particular, Leu led to a green tea extract that has enhanced roasted aroma and also mellow taste, and deep, harmonious, fine flavor. Also, Table 1 showed that the addition of Phe, Glu, Gly, Pro, and theanine generally deepened the aroma, and in particular Phe showed a significantly deepened aroma.

**[Table 1]**

| Amino acid added | Evaluation | Comments |
|---|---|---|
| ~ | ~ | Control |
| Åsp | × | Comparable with the control |
| Glu | Δ | Elegant, light aroma |
| Ser | × | Comparable with the control |
| Glu | Δ | Slightly deepened aroma |
| His | × | Comparable with the control |
| Arg | × | Comparable with the control |
| Thr | × | Comparable with the control |
| Ala | × | Comparable with the control |
| Pro | Δ | Slightly deepened aroma |
| Theanin | Δ | Slightly deepened aroma |
| Tyr | × | Comparable with the control |
| Val | Δ ∼ ○ | Slightly produced soy sauce-like roasted aroma |
| Met | × | Smells of sweet potato; significantly different from the control, but negative aroma |
| Ile | ○ | A little soy sauce-like aroma; deepened roasted aroma |
| Leu | ⊚ | Soy sauce-like aroma; deepened roasted aroma |
| Lys | × | Comparable with the control |
| Phe | ○ | Floral sweet aroma |

### Example 2. Manufacture of a green tea drink-Impregnation of tea extract

### (1) Manufacture of a tea extract

An extract containing a high concentration of an amino acid was manufactured by the following process. First, 10 g of green tea leaves (the degree of pan-roasting: medium) were sealed in a closed container equipped with a stirrer, and 180 mL of ion exchanged water at 40°C was added to the container to immerse the green tea leaves in the water. To the container, 0.2 g of a protease preparation ("Kokulase·P" from Mitsubishi-Kagaku Foods Corporation) was added, and the mixture was stirred for 16 hours while kept at 40°C to perform enzyme treatment. The resulting enzyme-treated liquid was then heated at 90°C for 10 minutes to deactivate the enzyme, resulting in an enzyme extract (a sample A: the enzyme added). Also, a green tea extract (a tea extract) was prepared in a similar manner except that no enzyme was added (a sample B: no enzyme added).

The respective compositions of amino acids in the samples A and B were analyzed by HPLC. The conditions of the measurement were shown below, and 17 amino acids (aspartic acid, glutamic acid, serine, glycine, histidine, arginine, threonine, alanine, proline, theanine, tyrosine, valine, methionine, isoleucine, leucine, lysine, and phenylalanine) were used as standard substances.

**[Table 2]**

| | | | | | |
|---|---|---|---|---|---|
| (HPLC conditions) | | | | | |
| HPLC system: Waters Amino Acid Analyzer 2695 | | | | | |
| Column: AccQ-Tag column(3.9 mm x 150 mm) | | | | | |
| Column temperature: 40°C | | | | | |
| Injection volume: 5µL | | | | | |
| Detection: EX 250 nm, EM 395 nm, Gain 100 | | | | | |
| Mobile phase | | | | | |
| | Mobile phase A: AccQ-TagA (pH5.8) | | | | |
| | Mobile phase B: Acetonitrile | | | | |
| | Mobile phase C: water/methanol = 9/1 | | | | |
| | Gradient program: | | | | |

| | Time (min.) | Flow rate (ml/min) | %A | %B | %C |
|---|---|---|---|---|---|
| | 0 | 1 | 100 | 0 | 0 |
| | 1 | 1 | 99 | 1 | 0 |
| | 16 | 1 | 97 | 3 | 0 |
| | 25 | 1 | 94 | 6 | 0 |
| | 35 | 1 | 86 | 14 | 0 |
| | 40 | 1 | 86 | 14 | 0 |
| | 50 | 1 | 82 | 18 | 0 |
| | 51 | 1 | 0 | 60 | 40 |
| | 54 | 1 | 100 | 0 | 0 |
| | 75 | 1 | 0 | 60 | 40 |
| | 110 | 0 | 0 | 60 | 40 |

Table 3 shows results of amino acid analysis for the tea extracts. Fig. 1 shows the results of amino acid analysis for Val, Ile, and Leu in Table 3. As shown in Fig. 1, the enzyme-treated tea extracts (sample As) have increased ratios of Val, Ile, and Leu, compared with non-enzyme-treated tea extracts (sample Bs). The calculated ratios of Val, Ile, and Leu to an amino acid Met that produces an unpleasant aroma in Example 1 [(Val+Ile+Leu)/(Met)] were 0.16 for no enzyme treatment and 1.47 for enzyme treatment.

**[Table 3]**

| | | in mg/L |
|---|---|---|
| | No enzyme added | Enzyme added |
| Asp | 70 | 51.1 |
| Glu | 88.2 | 76 |
| Ser | 40.8 | 40.1 |
| Gly | 12.8 | 17.6 |
| His | 41.6 | 27.1 |
| Arg | 83.8 | 141.9 |
| Thr | 47.8 | 41.2 |
| Ala | 33.8 | 46.6 |
| Pro | 15.8 | 48.8 |
| Theanin | 264.7 | 175.8 |
| Tyr | 46.7 | B2.2 |
| Val | 36.3 | 49.8 |
| Met | 90.7 | 95.2 |
| Ile | 27.3 | 36.1 |
| Leu | 69.6 | 112.4 |
| Lys | 33.5 | 57.8 |
| Phe | 58.3 | 97.4 |
| 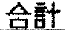 | 1062 | 1197 |

### (2) Manufacture of tea leaves impregnated with a tea extract

The respective amino acid-containing solutions that are allowed to penetrate into tea leaves were prepared as follows:
- A 1% aqueous amino-acid solution: the solution was prepared to have the composition of amino acids similar to that of the enzyme-treated green tea extract (a sample A) in process (1), using an amino acid from NACALAI TESQUE, INC. That is, the total amount of the 17 amino acids was 1% by weight, and the total amount of the amino acid A (Val, Leu, and Ile) out of the 17 amino acids was 0.2% by weight. Moreover, the concentration of catechins was 0% by weight.
- A green tea extract: the green tea extract was prepared by extracting from commercially available green tea leaves (Yabukita, Ichibancha (the first crop of tea leaves)) with hot water that is 20 times the tea leaves in weight. The total amount of the 17 amino acids was 0.2% by weight, and the total amount of the amino acid A (Val, Leu, and Ile) out of the 17 amino acids was 0.0008% by weight. Moreover, the measured concentration of catechins was 0.35% by weight.
- A green tea concentrate (amino acid 1%): the green tea concentrate was prepared by concentrating under reduced pressure the green tea extract described above such that the total amount of the 17 amino acids is 1%. The total amount of the amino acid A (Val, Leu, and Ile) in the green tea concentrate was 0.004% by weight, and the concentration of catechins was 1.75% by weight.
- An enzyme-treated green tea concentrate: the enzyme-treated green tea concentrate was prepared by concentration of the tea extract (a sample A) prepared in Example 2(1) under reduced pressure such that the total amount of the 17 amino acids was 1%. The total amount of the amino acid A (Val, Leu, and Ile) in the enzyme-treated green tea concentrate, and the concentration of catechins was 1% by weight.

Green tea leaves before pan-roasting (crude tea; Sanbancha, Yabukita) (raw material tea leaves) each were impregnated by spraying and stirring with the resulting amino acid-containing solution in a weight ratio of the raw material tea leaves: the amino acid-containing solution of 1:0.2, and then were subjected to pan-drying. The total amount of the amino acids added to the raw material tea leaves (the total amount of the 17 amino acids described above) was 2000 mg/kg, and the total amount of valine, isoleucine, and leucine (Val+Ile+Leu) was 460 mg/kg for the enzyme-treated green tea concentrate. The pan-drying conditions are as follows:
- Pan roaster: Terada Seisakusyo, TR-10
- Drum temperature: 200°C
- Revolution number of drum: 12 rpm
- Pan-roasting time: 15 to 20 minutes
- Pan-roasting temperature: 150°C

### (3) Manufacture of a green tea drink

The tea leaves (4 kinds) impregnated with the amino acid-containing solution prepared in (2) each were weighed 2g, and respective green tea drinks were obtained by extracting from these tea leaves with 200 g of hot water for 5 minutes.

The results of sensory evaluations are shown in Table 4. The table shows that a pleasant, unique soy sauce-like aroma can be perceived for higher amounts of Val, Ile and Leu added compared with the conventional green tea extracts, and in particular, for addition of the enzyme-treated green tea extract, a green tea drink shows a significant effect. When the green tea extract was just concentrated in order to adjust the total concentration of amino acids, only small amounts of Val, Ile, and Leu were added, without any significant change in aroma, while large amounts of catechins were added with an increasing astringent taste.

**[Table 4]**

| | 1% Aqueous amino-acid solution | Green tea extract | Green tea concentrate (amino acid 1%) | Enzyme-treated green tea extract |
|---|---|---|---|---|
| Comments | Soy sauce-like savoriness | slightly deepened aroma | No significant change in aroma; an increased astringent taste | Soy sauce-like savoriness is strong |
| Evaluation | ○ | Δ | Δ | ⊚ |

| (% by weight) | | | | |
|---|---|---|---|---|
| Total solid content (Bx) | 1.00% | 1.70% | 8.50% | 15.00% |
| Total amount of the 17 amino acids | 1.00% | 0.20% | 1.00% | 1.00% |
| Total amount of the amino acid A (Val, Leu, and Ile) | 0.20% | 0.0008% | 0.004% | 0.20% |
| Total amount of catechins | 0.00% | 0.35% | 1.75% | 1.00% |

| (Ratio to the soluble solid content) | | | | |
|---|---|---|---|---|
| Total amount of the 17 amino acids | 100.00% | 11.76% | 11.76% | 6.67% |
| Total amount of the amino acid A (Val, Leu, and Ile) | 20.00% | 0.05% | 0.05% | 1.33% |
| Total amount of catechins | 0.00% | 20.59% | 20.59% | 6.67% |

### Example 3. Manufacture of a container-packed green tea drink

The tea leaves pan-dried in Example 2(2) after impregnation with an enzyme-treated green tea concentrate were used to manufacture a container-packed green tea drink. That is, the tea leaves prepared in Example 2(2) were weighed 7 g, and an extract was obtained by extracting from the tea leaves with 200 g of hot water for 5 minutes. After removal of the used tea leaves, the extract was cooled down to 30°C or less and was subjected to a clearing treatment by centrifugation. To the resulting filtrate was added L-ascorbic acid as an antioxidant and sodium bicarbonate as a pH adjuster to adjust the pH to 6.1. Then, the pH-adjusted extract was made up to 1 L with water such that the soluble solid content (Brix) in the final preparation becomes 0.25%. A can was filled with the resulting preparation, and the canned preparation was retort-sterilized at a temperature of 130°C for one minute, and was cooled in the refrigerator at 5°C to yield a container-packed green tea drink. A control container-packed green tea drink was also manufactured in a similar manner using tea leaves prepared in a similar manner except that a tea extract was not sprayed.

The inventive container-packed green tea drink had enhanced roasted aroma and sweet and mellow tastes even after sterilization, and had fine flavor without heated odors. Moreover, the inventive drink held the pleasant aroma even after storage in the refrigerator, and had unperceivable unpleasant aroma such as off-flavor caused by thermal degradation.

### Example 4. Componential analyses

Various components were analyzed for the container-packed green tea drinks prepared in Example 3. The componential analyses were also conducted for container-packed green tea drinks prepared as in Example 3 except that the tea leaves prepared in Example 2(2) were replaced with commercially available sencha leaves or hojicha leaves (Comparative examples 1 and 2), and commercially available container-packed tea drinks (green tea drinks A and B, and a hojicha drink C) as controls. Caffeine and catechins were analyzed by HPLC, and various aroma components (2-methylbutanal (2MB), 3-methylbutanal (3MB), and 2,5-dimethylpyrazine (DM)) were analyzed by GC/MS. These analytical methods are described below.

### (HPLC analysis)

Analyzer: Tosoh Corporation, TOSOH HPLC system LC8020 model II [Multistation: LC-8020, Pump: CCMC-II, Auto-sampler: AS-8021, Detector: UV-8020, Column oven: CO-8020, Online degasser: SD-8023]
Analysis conditions: [Column: TSK gel ODS-80Ts QA, Eluant A: 10% acetonitrile/water 0.05% TFA, Eluant B: 80% acetonitrile/water 0.05% TFA, Flow rate: 1.0 ml/min, Temperature 40°C, Detection: UV 275 nm]

### (GC/MS analysis)

Into a 20 ml screwed glass bottle (diameter 18 mm; from GERSTEL K.K.) was placed 5 ml of a sample liquid, and the bottle was tightly closed with a metal lid with a polytetrafluoroethylene (PTFE) septum (from GERSTEL K.K.). Aroma components were extracted by a solid-phase microextraction technique (SPME). Quantitative analysis was carried out by the standard addition method, where the peak area detected by a GC/MS in SIM mode was corrected using the detected value for n-butanal added as internal standard.

The reagents used were available from the following sources:
·2-methylbutanal: Wako Pure Chemical Industries, Ltd.
·3-methylbutanal: Sigma-Aldrich Corporate
·2,5-dimethylpyrazine: Tokyo Chemical Industry Co., Ltd.
·n-butanal: KANTO CHEMICAL CO.,INC.
Analyzer: SPME Fiber: Stable Flex/SS, 85µm, Carboxen/PDMS (from SUPELCO), Automated volatile extract injection device: Multi Purpose Sampler MPS2 (from GERSTEL K.K.)
Analysis Conditions: Pre-heating: at 70°C for 5 minutes, Stirring: non-stirred, Volatile extraction: at 70°C for 50 minutes, Desorption time of Volatiles:10 minutes, Equilibration after desorption: at 300°C for 20 minutes, GC oven: Agilent 6890N (from Agilent Technologies), Column: HP-5MS, 30 m x 0.25 mm i.d., 1 µm (from Agilent Technologies), GC temperature conditions: 40°C (5 minutes) → 10°C/min. → 100°C → 5°C/min. → 160°C → 20°C/min. → 280°C (6 minutes), Carrier gas: helium, 1.6 ml/min., Constant flow rate mode, Injection: splitless, Inlet temperature: 250°C, Mass spectrometer: Agilent 5973 inert (from Agilent Technologies), Measuring mode: Scan & SIM simultaneous measurement, Scan range: m/z 35 to 300, SIM parameter: m/z 57 (detection for 2-methylbutanal), 58 (detection for n-butanal and 3-methylbutanal), 108 (detection for 2,5-dimethylpyrazine), 109 (detection for 2-acetylpyrrole), Analysis software: ChemStation (from Agilent Technologies).

The results are shown in Table 5. These results demonstrated that the container-packed tea drink manufactured by the method of the present invention, that is, by impregnating raw material tea leaves with an aqueous solution containing a specific amino acid or amino acids (one or more amino acids selected from the group consisting of leucine, valine, and isoleucine), and then pan-drying the tea leaves at a temperature of 100 to 200°C followed by use of an extract from the resulting tea leaves, has a specifically high ratio of 2-methylbutanal and 3-methylbutanal to 2,5-dimethylpyrazine, compared with the container-packed tea drink manufactured using an extract from conventional tea leaves.

**[Table 5]**

| | Brix | Caffeine (ppm) | Catechins (ppm) | 3MB (ppb) | 2MB (ppb) | (A)2MB+3MB (ppb) | (B)DM (ppb) | (A)/(B) |
|---|---|---|---|---|---|---|---|---|
| Example 3 | 0.25 | 114 | 400 | 45.2 | 17.2 | 62.5 | 11 | 5.88 |
| Comparative example 1 (Commercially available sencha leaves used) | 0.25 | 135 | 392 | 10.0 | 1.8 | 11.8 | 0 | - |
| Comparative example 2 (Commercially available hojicha leaves used) | 0.25 | 145 | 85 | 4.2 | 3.0 | 7.2 | 72 | 0.10 |
| Commercially available drink (Green tea drink A) | 0.23 | 110 | 310 | 12.6 | 9.1 | 21.7 | 36 | 0.61 |
| Commercially available drink (Green tea drink B) | 0.25 | 140 | 420 | 13.0 | 9.7 | 22.7 | 17 | 1.30 |
| Commercially available drink (Hojicha drink C) | 0.25 | 130 | 156 | 4.5 | 4.8 | 9.3 | 103 | 0.09 |

### Example 5. Manufacture of a green tea drink

An enzyme-treated green tea concentrate from Example 2(2) was used as an amino acid-containing solution. Green tea leaves before pan-roasting (crude tea; Sanbancha, Yabukita) (raw material tea leaves) each were impregnated by spraying and stirring with the amino acid-containing solution in weight ratios of the raw material tea leaves: the amino acid-containing solution of 1:0.02 (the ratio of the amino acid-containing solution to the weight of the tea leaves 2%), 1:0.05 (the amino acid-containing solution 5%), 1:0.1 (the amino acid-containing solution 10%), and 1:0.2 (the amino acid-containing solution 20%), and then were subjected to pan-drying as in Example 2 except that the pan-roasting temperature was 110 to 170°C. Moreover, control tea leaves were prepared by impregnating tea leaves with water (amino acid 0%) and pan-drying them in a similar manner. These tea leaves each were weighed 2g, and respective green tea drinks were obtained by extracting from these tea leaves with 200 g of hot water for 5 minutes. The amounts of various amino acids added to the respective raw material tea leaves in the amino acid-impregnating process are shown in Table 6.

**[Table 6]**

| | Total amount of amino acids (mg/kg) | Val+Ile+Leu (mg/kg) |
|---|---|---|
| Amino acid-containing solution 0% | **0** | **0** |
| Amino acid-containing solution 2% | **200** | **46** |
| Amino acid-containing solution 5% | **500** | **115** |
| Amino acid-containing solution 10% | **1000** | **230** |
| Amino acid-containing solution 20% | **2000** | **460** |

Sensory evaluations were conducted. Compared with the control green tea drink, the green tea drink manufactured using tea leaves that underwent the amino acid-impregnating treatment produced a pleasant soy sauce-like aroma and enhance the roasted aroma; all the five panelists determined that the inventive green tea drink had finer flavor than that the control did. This demonstrated that it is preferred to impregnate 1 kg of the raw material tea leaves with 45 mg or more of the amino acid (A) (the total amount of leucine, valine, and isoleucine) and to pan-roast the tea leaves.

### Example 6. Manufacture of a barley tea drink-Addition of an amino acid

Commercially available unroasted barley was subjected to the popping treatment to prepare swollen barley such that water was allowed to readily penetrate into the swollen barley. That is, barley was heated at about 180°C for 5 minutes to cause the popping. The swollen barley was spray-impregnated with a 1% aqueous solution of each of various amino acids in a weight ratio of the barley: the aqueous amino-acid solution of 1:0.2, and was baked at 150°C for 15 minutes in a roaster (I·C Electronnics industry Co., Ltd., TORNADE KING TypeT) to prepare barley for tea (baked barley). The amount of the amino acid added was about 2000 mg/kg. For the preparation, the following 17 amino acids were used: (i) aspartic acid (Asp), (ii) glutamic acid (Glu), (iii) serine (Ser), (iv) glycine (Gly), (v) histidine (His), (vi) arginine (Arg), (vii) threonine (Thr), (viii) alanine (Ala), (ix) proline (Pro), (x) theanine (Theanin), (xi) tyrosine (Tyr), (xii) valine (Val), (xiii) methionine (Met), (xiv) isoleucine (Ile), (xv) leucine (Leu), (xvi) lysine (Lys), and (xvii) phenylalanine (Phe) (all in the L-form avaialble from NACALAI TESQUE, INC.). Control barley for tea was prepared in a similar manner except that the amino acid-impregnating process did not take place, i.e., an aqueous amino-acid solution was replaced with water.

These 17 baked barleys spray-baked with an amino acid and the control baked barley (no amino acid added) each were weighed 2g, and respective extracts (Brix: about 0.15) were obtained by extracting from these baked barleys with 200 g of hot water (95°C) for 5 minutes.

Sensory evaluations were conducted for the resulting barley tea extracts (17 barley tea extracts prepared through impregnation with an amino acid-containing solution and one control barley tea extract; total 18 barley tea extracts). The results of the evaluation showed that neutral amino acids Val, Ile, and Leu that each have a molecular weight of 100 or more and an alkyl chain enhanced a roasted aroma perceived to be pleasant without any burnt odors or discordant flavors. In particular, Leu led to a barley tea extract that has enhanced roasted aroma and also mellow taste, and harmonious, fine flavor. Phe imparted a floral sweet aroma, while Asp, Glu, Ser, Gly, His, Arg, Thr, Ala, Pro, Theanin, Tyr, and Lys showed no difference from the control. Met produced smells of sweet potato, resulting in more unpleasant flavor than the control produced.

### Example 7. Manufacture of a barley tea drink-Impregnation with a tea extract

### (1) Manufacture of barley for tea impregnated with a tea extract

An enzyme-treated green tea concentrate manufactured in Example 2(2) was used as an amino acid-containing solution. Commercially available unroasted barley was heated at about 180°C for 5 minutes for the popping treatment. The resulting barley was impregnated by spraying and stirring with the enzyme-treated green tea concentrate in a weight ratio of the raw material barley (barley):the amino acid-containing solution of 1:0.2. The total amount of the amino acids added to the barley (the total amount of the 17 amino acids described in Example 1) was 2000 mg/kg, and the total amount of valine, isoleucine, and leucine (Val+Ile+Leu) was 460 mg/kg.

This amino acid-impregnating process of spraying an amino acid-containing solution was followed by a baking treatment at 150°C or 230°C. Control baked barley was manufactured in a similar manner except that the amino acid-containing solution was replaced with water. Conditions of the baking treatment are as follows:
- Pan roaster: I·C Electronnics industry Co., Ltd., TORNADE KING TypeT
- Pan-roasting time: 15 minutes
- Pan-roasting temperature: 150°C and 230°C
where, the pan-roasting time refers to a time period between loading the amino acid-impregnated barley on a pan-roaster and unloading it from the pan-roaster, and the pan-roasting temperature refers to an ambient temperature in the pot of the pan-roaster.

### (2) Manufacture of a barley tea drink

The resulting baked barleys prepared in the process (1) described above each were weighed 2g, and respective barley tea drinks were obtained by extracting from these baked barleys with 200 g of hot water for 5 minutes. Sensory evaluations were conducted for these barley tea drinks at 60°C. These barley tea drinks were rated for savoriness, sweet aromas (amaka), and burnt odors in 4 grades based on the following evaluation criteria: not perceived (score 0), slightly perceived (score 1), perceived (score 2), and strongly perceived (score 3). The results are shown in Table 7. For the control process, at low pan-roasting temperatures, sweet aromas were produced but savoriness was low; at high pan-roasting temperatures, savoriness became high and also burnt odors were readily produced. This process was unable to achieve a balance between sweet aromas and savoriness of the barley tea drink. In contrast, the barley according to the method of the invention, that is, prepared by addition of an enzyme-treated green tea extract and a baking treatment, have reduced burnt odors and achieved a balance between savoriness and sweet aromas, resulting in a barley tea drink with fine flavor.

**[Table 7]**

| Pan-roasting temperature | Additive | Savoriness | Amaka | Burnt odors | Comprehensive evaluation |
|---|---|---|---|---|---|
| **150°C** | - | **1** | **2** | **0** | Δ |
| **230°C** | - | **3** | **1** | **3** | Δ |
| **150°C** | Enzyme-treated green tea extract | **3** | **3** | **1** | ⊚ |

### Example 8. Manufacture of a barley tea drink

An enzyme-treated green tea concentrate manufactured in Example 2(2) was used as an amino acid-containing solution as in Example 7. Commercially available roasted barley (L value: 43) was impregnated with an amino acid-containing solution in a weight ratio of the barley: the amino acid-containing solution of 1:0.2 as in Example 7, and then was subjected to the baking treatment under the following conditions:
- Pan roaster: I·C Electronnics industry Co., Ltd., TORNADE KING TypeT
- Pan-roasting temperature: 150°C
- Pan-roasting time: 15 minutes
As a control, commercially available barley that did not undergo any impregnation with an amino acid solution or any roasting treatment was used as received.
The resulting baked barley and control barley each were weighed 2 g, and respective barley tea drinks were obtained by extracting from these barleys with 200 g of hot water for 5 minutes.

Sensory evaluations were conducted for these barley tea drinks at about 60°C. Compared with the control barley tea drink, the inventive barley tea drinks had savoriness inherent in the raw material barley (the control) plus sweet aromas, and produced even richer flavor.

### Example 9. Manufacture of a container-packed barley tea drink

The barley for tea prepared in Example 7(1) through impregnation with an amino acid-containing solution and a baking treatment (150°C) was used to manufacture a container-packed barley tea drink. That is, the barley for tea prepared in Example 7(1) was weighed 7 g, and an extract was obtained by extracting from the barley with 250 g of hot water for 5 minutes. After removal of the used barley, the extract was cooled down to 30°C or less and was subjected to a clearing treatment by centrifugation. To the resulting filtrate, was added L-ascorbic acid as an antioxidant and sodium bicarbonate as a pH adjuster to adjust the pH to 5.0. Then, the pH-adjusted extract was made up to 1L with water such that the soluble solid content (Brix) in the final preparation becomes 0.15. A can was filled with the resulting preparation, and the canned preparation was retort-sterilized at a temperature of 130°C for one minute, and was cooled in the refrigerator at 5°C to yield a container-packed barley tea drink. A control container-packed green tea drink was also manufactured in a similar manner using the control barley for tea prepared in Example 7(1) (prepared through the baking treatment at 150°C).

The inventive container-packed barley tea drink had enhanced roasted aroma and sweet and mellow tastes even after sterilization, and had a harmonious balance in savoriness inherent in the barley. Also, even after stored in the refrigerator, the inventive barley tea drink developed no paste feeling (sticky feeling), and held fine flavor, mouth feel, and aftertaste after drinking (pleasant taste).

### Example 10. Manufacture of a brown rice tea drink -Addition of an amino acid

Commercially available milled rice was immersed in water for 40 minutes and steamed for 30 minutes such that water was allowed to readily penetrate into the steamed rice. The steamed rice was spray-impregnated with a 1% aqueous solution of each of various amino acids in a weight ratio of the brown rice: the aqueous amino-acid solution of 1:0.2, and was then roasted at 150°C for 15 minutes in a roaster (I·C Electronnics industry Co., Ltd., TORNADE KING TypeT) to prepare brown rice for tea (roasted brown rice). The amount of the amino acid added to the brown rice was about 2000 mg/kg. For the preparation, the following 17 amino acids were used: (i) aspartic acid (Asp), (ii) glutamic acid (Glu), (iii) serine (Ser), (iv) glycine (Gly), (v) histidine (His), (vi) arginine (Arg), (vii) threonine (Thr), (viii) alanine (Ala), (ix) proline (Pro), (x) theanine (Theanin), (xi) tyrosine (Tyr), (xii) valine (Val), (xiii) methionine (Met), (xiv) isoleucine (Ile), (xv) leucine (Leu), (xvi) lysine (Lys), and (xvii) phenylalanine (Phe) (all in the L-form avaialble from NACALAI TESQUE, INC.). Control roasted brown rice was prepared in a similar manner except that the amino acid-impregnating process did not take place, i.e., an aqueous amino-acid solution was replaced with water.

These 17 roasted brown rices spray-roasted with an amino acid and the control roasted brown rice (no amino acid added) each were weighed 2g, and respective extracts (Brix: about 0.15) were obtained by extracting from these roasted brown rices with 200 g of hot water (95°C) for 5 minutes.

Sensory evaluations were conducted for the resulting brown rice tea extracts (17 brown rice tea extracts prepared through impregnation with an amino acid-containing solution and one control brown rice tea extract; total 18 brown rice tea extracts). The results of the evaluation showed that neutral amino acids Val, Ile, and Leu that each have a molecular weight of 100 or more and an alkyl chain enhanced a roasted aroma perceived to be pleasant without any burnt odors or discordant flavors. In particular, Leu led to a brown rice tea extract that has enhanced roasted aroma and also mellow taste, and harmonious, fine flavor. Phe imparted a floral sweet aroma, while Asp, Glu, Ser, Gly, His, Arg, Thr, Ala, Pro, Theanin, Tyr, and Lys showed no difference from the control. Met produced smells of sweet potato, resulting in less pleasant flavor than the control produced.

### Example 11. Manufacture of a brown rice tea drink -Impregnation with a tea extract

### (1) Manufacture of brown rice for tea impregnated with a tea extract

An enzyme-treated green tea concentrate manufactured in Example 2(2) was used as an amino acid-containing solution. Commercially available milled rice was immersed in water, was drained after about 4 hours, and then was steamed for 30 minutes. The steamed rice was impregnated by spraying and stirring with an enzyme-treated green tea concentrate in a weight ratio of the rice: the amino acid-containing solution of 1:0.2. The total amount of the amino acids added to the rice (the total amount of the 17 amino acids described in Example 1) was 2000 mg/kg, and the total amount of valine, isoleucine, and leucine (Val+Ile+Leu) was 460 mg/kg.

This amino acid-impregnating process of spraying an amino acid-containing solution was followed by a roasting treatment at 150°C or 230°C. Control roasted brown rice was manufactured in a similar manner except that the amino acid-containing solution was replaced with water. Conditions of the roasting treatment are as follows:
- Pan-roaster: I·C Electronnics industry Co., Ltd., TORNADE KING TypeT
- Pan-roasting time: 10 minutes
- Pan-roasting temperature: 150°C and 230°C
where, the pan-roasting time refers to a time period between loading the amino acid-impregnated brown rice on a pan-roaster and unloading it from the pan-roaster, and the pan-roasting temperature refers to an ambient temperature in the pot of the pan-roaster.

### (2) Manufacture of a brown rice tea drink

The resulting roasted brown rice prepared in the process (1) described above and control brown rice each were weighed 2g, and respective brown rice tea drinks were obtained by extracting from these brown rices with 200 g of hot water for 5 minutes.

Sensory evaluations were conducted for these brown rice tea drinks at about 60°C. These barley tea drinks were rated for savoriness, sweet aromas (amaka), and burnt odors in 4 grades based on the following evaluation criteria: not perceived (score 0), slightly perceived (score 1), perceived (score 2), and strongly perceived (score 3). The results are shown in Table 8. For the control process, at low pan-roasting temperatures, sweet aromas were produced but savoriness was low; at high pan-roasting temperatures, savoriness became high and also burnt odors were readily produced. This process was unable to achieve a balance between sweet aromas and savoriness of the barley tea drink. In contrast, the barley according to the method of the invention, that is, prepared by addition of an enzyme-treated green tea extract and a baking treatment, have reduced burnt odors and achieved a balance between savoriness and sweet aromas, resulting in a barley tea drink with fine flavor.

**[Table 8]**

| Pan-roasting temperature | Additive | Savoriness | Amaka | Burnt odors | Comprehensive evaluation |
|---|---|---|---|---|---|
| **150°C** | - | **1** | **2** | **1** | Δ |
| **230°C** | - | **3** | **0** | **3** | Δ |
| **150°C** | Enzyme-treated green tea extract | **3** | **3** | **1** | ⊚ |

### Example 12. Manufacture of a container-packed brown rice tea drink

The brown rice for tea prepared in Example 11(1) through impregnation with an amino acid-containing solution and a baking treatment (150°C) was used to manufacture a container-packed brown rice tea drink. That is, a mixture of the brown rice for tea prepared in Example 11(1) and green tea (sencha) in the ratio of 5:5 was weighed 7 g, and an extract was obtained by extracting with 250 g of hot water for 5 minutes. After removal of the used brown rice and green tea, the extract was cooled down to 30°C or less and was subjected to a clearing treatment by centrifugation. To the resulting filtrate, was added L-ascorbic acid as an antioxidant and sodium bicarbonate as a pH adjuster to adjust the pH to 6.0. Then, the pH-adjusted extract was made up to 1L with water such that the soluble solid content (Brix) in the final preparation becomes 0.15. A can was filled with the resulting preparation, and the canned preparation was retort-sterilized at a temperature of 130°C for one minute, and was cooled in the refrigerator at 5°C to yield a container-packed brown rice tea drink. A control container-packed brown rice tea drink was also manufactured in a similar manner using the control brown rice for tea prepared in Example 11(1) (prepared through the roasting treatment at 150°C).

The inventive container-packed brown rice tea drink had enhanced roasted aroma and sweet and mellow tastes even after sterilization, and had a harmonious balance in savoriness inherent in the brown rice. Also the container-packed brown rice tea drink had fine flavor without perceivable off-flavors and odors such as heated odors. Also, even after stored in the refrigerator, the inventive brown rice tea drink developed no paste feeling (sticky feeling), and held fine flavor, mouth feel, and aftertaste after drinking (pleasant taste).

## Claims

1. A method for manufacturing a tea drink ingredient, comprising:
impregnating a tea drink ingredient with an aqueous amino-acid solution that contains at least one amino acid selected from the group consisting of leucine, valine, and isoleucine, and
subjecting the impregnated tea drink ingredient to a heat treatment at a temperature of 100 to 200°C.

2. The method according to claim 1, wherein the tea drink ingredient comprises tea leaves, and the heat treatment is pan-drying.

3. The method according to claim 1, wherein the tea drink ingredient is barley for tea, and the heat treatment is baking.

4. The method according to claim 1, wherein the tea drink ingredient is brown rice for tea, and the heat treatment is roasting.

5. The method according to any one of claims 1 to 4, wherein 45 mg or more of the amino acid per kg of the tea drink ingredient is added.

6. The method according to any one of claims 1 to 5, wherein the amino acid solution is an extract of green tea leaves.

7. The method according to claim 6, wherein the extract of green tea leaves is subjected to an enzyme treatment.

8. A method for manufacturing a tea drink, comprising:
impregnating a tea drink ingredient with an aqueous amino-acid solution that contains at least one amino acid selected from the group consisting of leucine, valine, and isoleucine,
subjecting the impregnated tea drink ingredient to a heat treatment at a temperature of 100 to 200°C, and
extracting an aqueous extract with water from the heated tea drink ingredient.

9. The method according to claim 8, wherein the tea drink ingredient is barley for tea, and the step of preparing the aqueous extract is conducted using 5 to 150 parts by weight of water per part by weight of the heated barley.

10. The method according to claim 8, wherein the tea drink ingredient is brown rice, the method further comprises, before the step of preparing the aqueous extract, a step of combining the heated brown rice and green tea in a weight ratio of 2:8 to 8:2, and the step of preparing the aqueous extract is conducted using 5 to 150 parts by weight of water per part by weight of the mixture of the roasted brown rice and green tea.
